# EUROPÄISCHE PATENTSCHRIFT

(11) **EP 2 979 517 B1**
(45) Veröffentlichungstag und Bekanntmachung des Hinweises auf die Patenterteilung: **12.12.2018**
(21) Anmeldenummer: 15720478.5
(22) Anmeldetag: 29.04.2015
(51) Int. Cl.: H05B 6/64, H05B 6/70, H05B 6/72, H05B 6/74, H05B 6/80

(54) **VERFAHREN ZUR UNTERTEILUNG EINES GARRAUMES UND GARGERÄT**
METHOD FOR SUBDIVIDING A COOKING SPACE AND COOKING DEVICE
METHODE DE SUBDIVISION D'UN ESPACE DE CUISSON ET DISPOSITIF DE CUISSON

(30) Priorität: 29.04.2014 DE 102014106029; 29.04.2014 DE 102014106031
(43) Veröffentlichungstag der Anmeldung: 03.02.2016
(73) Patentinhaber: Topinox Sarl, 68270 Wittenheim (FR)
(72) Erfinder: SCHREINER, Thomas, 86916 Kaufering (DE)
(74) Vertreter: Holzwarth-Rochford, Andreas
(86) Internationale Anmeldenummer: PCT/IB2015/053104
(87) Internationale Veröffentlichungsnummer: WO 2015/166424

(56) Entgegenhaltungen:
- EP-A2- 1 471 773
- WO-A2-2011/138675

## Beschreibung

Die vorliegende Erfindung betrifft ein Verfahren zur Unterteilung eines Garraumes eines Gargeräts in mehrere Zonen, wobei mittels zumindest einer Zuführeinrichtung von durch zumindest eine Mikrowellenquelle erzeugte Mikrowellenstrahlung in den Garraum eingebracht wird, sowie ein Gargerät mit einem Garraum, der in mehrere Zonen unterteilbar ist.

Aus dem Stand der Technik sind verschiedene Gargeräte bekannt.

So sind einerseits Gargeräte bekannt, bei denen ein Gargut unter Einwirkung von Konvektionswärme, bei Kombigargeräten wahlweise unter Anpassung der Feuchte durch Zufuhr und Abfuhr von Dampf in den Garraum, gegart wird. So offenbart die EP 1 657 493 A1 einen elektrischen Ofen mit Unterteilungsplatten. Es wird vorgeschlagen, dass zur Unterteilung eines Garraums eines elektrischen Ofens, der durch eine Tür verschließbar ist, in den Garraum eine Unterteilungsplatte lösbar eingebracht werden kann. Durch die Unterteilungsplatte wird der Garraum in zwei Garraumbereiche hermetisch unterteilt, so dass unabhängig voneinander Garprozesse in den jeweiligen Ebenen durchgeführt werden können.

Auch die EP 2 299 181 A1 beschreibt den Einsatz eines Garraumteilers in einem Gargerät in Form eines Backofens. Es wird vorgeschlagen, dass in dem Garraumteiler eine Heizeinrichtung integriert wird und über eine Sensoreinheit erkannt wird, wenn der Garraumteiler im Garraum angeordnet wird.

Darüber hinaus sind aus dem Stand der Technik Gargeräte bekannt, bei welchen eine Erwärmung eines Garguts mittels Mikrowellenstrahlung erfolgt. Beispielsweise die EP 2 326 141 B1 offenbart ein Gargerät in Form eines Mikrowellenherds. Es wird vorgeschlagen, dass ein sogenannter Festkörpermikrowellengenerator eingesetzt wird, um eine Garguterkennung innerhalb des Garraums zu erreichen. Nachteilig bei diesem Gargerät ist jedoch, dass in dem Garraum keine unterschiedlichen Zonen ausgebildet werden können und somit nicht parallel zu einander unterschiedliche Garprozesse durchgeführt werden können.

So ist es wünschenswert, dass zur Erhöhung der Gargeschwindigkeit mittels Mikrowellenstrahlung zwei Gargüter mit unterschiedlichen Garparametern gegart werden können, beispielsweise um zu einem vorgegebenen Zeitpunkt unterschiedliche Gargrade, wie rare, medium oder durch, für die Gargüter zu erreichen. Auch ist es wünschenswert, dass unterschiedliche Gargutarten oder Gargutklassen parallel unter Verwendung unterschiedlicher Garparameter gegart werden können, beispielsweise Hauptspeisen und Beilagen parallel zubereitet werden. Insbesondere soll diese Zubereitung zumindest teilweise zeitversetzt durch eine sogenannte rollierende Beschickung erfolgen können. Bei einer rollierenden Beschickung werden die Gargüter jeweiligen Einschubebenen zu unterschiedlichen Zeiten zugeführt bzw. aus den einzelnen Garebenen zu unterschiedlichen Zeiten entnommen.

Zur gezielten und gleichmäßigen Erwärmung von Gargütern mittels Mikrowellenstrahlung schlägt die WO 2011/138675 A2 in einem gattungsgemäßen Verfahren eine Mikrowellenmoden-Analyse vor. Dazu soll Mikrowellenstrahlung so in einen Garraum über eine Vielzahl von Mikrowellenantennen eingestrahlt werden, dass bestimmte Hohlraummoden ausgebildet werden. Hierzu wird vorgeschlagen, dass eine Modenauswahl durch Einstellung der über die jeweilige Mikrowellenantenne eingespeiste Frequenz, Amplitude bzw. Phase der Mikrowellenstrahlung vorgenommen wird. Alternativ oder ergänzend wird vorgeschlagen, dass sogenannte "field adjusting elements (FAE)" im Garraum angeordnet werden, um eine Beeinflussung der Mikrowellen-Moden zu erreichen.

Nachteilig an diesem Verfahren ist jedoch, dass ein vergleichsweise hoher Aufwand betrieben werden muss, um Mikrowellenenergie so in den Garraum einzuspeisen, dass gezielt ein Gargut erwärmt wird. Insbesondere bei vergleichsweise großen Garräumen, beispielsweise solchen, bei denen die Abmessungen viel größer als die Wellenlänge der Mikrowellenstrahlung sind, ist der zu betreibende mathematische Aufwand sehr hoch. So müssen komplexe Berechnungen durchgeführt werden. Ferner sind bei solchen großen Garräumen die Anforderungen an die Komplexität des Mikrowelleneinspeisesystems so hoch, so dass ein sehr hoher konstruktiver und damit kostenintensiver Aufwand betrieben werden muss.

EP 1 471 773 A2 offenbart eine Mikrowellenheizvorrichtung, welche eine Heizkammer aufweist, die insbesondere in eine erste, eine zweite und eine dritte Heizregion unterteilt sein kann. Außerdem weist die Mikrowellenheizvorrichtung eine Vielzahl an Mikrowellenquellen auf, wobei über ein Kontrollsystem die Leistung und Phase einer jeden Mikrowellenquelle in Abhängigkeit einer Benutzerauswahl kontrolliert werden kann und damit in verschiedenen Heizregionen verschiedene Mikrowellen-Leistungen eingestellt werden können.

Die aus dem Stand der Technik bekannten Gargeräte weisen also den Nachteil auf, dass bei Einsatz von Mikrowellenstrahlung ein hoher konstruktiver und teurer Aufwand betrieben werden muss, um den Garraum auch bei vergleichsweise großen Garräumen, wie begehbaren Garräumen, über Mikrowellenstrahlung einerseits eine Erkennung eines Garguts zu erreichen und andererseits die Ausbildung von unterschiedlichen (Gar)Zonen zu ermöglichen.
Es ist daher Aufgabe der vorliegenden Erfindung, das gattungsgemäße Verfahren derart weiterzuentwickeln, dass die Nachteile des Stands der Technik überwunden werden, insbesondere ein Verfahren und ein Gargerät bereitgestellt werden, bei welchen auf konstruktiv einfache und damit kostengünstige Weise bei Einsatz von Mikrowellenstrahlung zur Garung und zur Garguterkennung ohne zusätzliche Sensoren unterschiedliche Zonen in einem Garraum ausgebildet werden können, um die Durchführung von unterschiedlichen Garprozessen in ein und demselben Garraum zu ermöglichen.
Diese Aufgabe wird hinsichtlich des Verfahrens erfindungsgemäß dadurch gelöst, dass zur Unterteilung des Garraums in zumindest zwei Zonen zumindest zwei, vorzugsweise zumindest drei, Zuführeinrichtungen in einer ersten Zone zu zumindest einer ersten Gruppe zusammengefasst werden, die Zuführeinrichtungen der ersten Gruppe mit einem gemeinsamen ersten Mikrowellensignal versorgt werden und durch die von den Zuführeinrichtungen der ersten Gruppe in den Garraum abgestrahlten Mikrowellen in der ersten Zone Hohlraummoden ausgebildet werden, wobei die Hohlraummoden sich im wesentlichen außerhalb zumindest einer benachbart zu der ersten Zone angeordneten, zweiten Zone erstrecken.

Mit der Erfindung wird vorgeschlagen, dass zumindest zwei Zuführeinrichtungen zu der ersten Gruppe zusammengefasst werden, der Garraum in zumindest zwei virtuelle Zonen unterteilt wird, insbesondere zumindest eine Grenze, vorzugsweise alle Grenzen zwischen den virtuellen Zonen zumindest bereichsweise, insbesondere im Wesentlichen vollständig transparent für Mikrowellenstrahlung ist bzw. sind, das erste Mikrowellensignal mit unterschiedlicher Phasenlagen und/oder Amplitude an die einzelnen Zuführeinrichtungen der ersten Gruppe geleitet wird und/oder durch die Zonen Garebenen innerhalb des Garraumes definiert werden.
Dabei kann in einer vorteilhaften Ausgestaltung vorgesehen sein, dass eine Position und/oder Ausrichtung der Zuführeinrichtungen und/oder die Phasenlage und/oder die Amplitude in Abhängigkeit von einer Frequenz des den Zuführeinrichtungen der ersten Gruppe zugeführten Mikrowellensignals festgelegt wird.
Bei den vorgenannten Ausführungsformen ist bevorzugt, dass die Position und/oder Ausrichtung der Zuführeinrichtungen und/oder die Phasenlage und/oder die Amplitude bei Veränderung der Frequenz der über die Mikrowellenquelle erzeugten Mikrowellenstrahlung verändert wird.
Dabei ist besonders bevorzugt, dass die Position und/oder Ausrichtung der Zuführeinrichtungen und/oder die Phasenlage und/oder die Amplitude in Abhängigkeit von einer, insbesondere rollierenden, Beschickung des Garraumes, insbesondere der ersten Zone und/oder der zweiten Zone, mit Gargut, festgelegt wird.
Erfindungsgemäß ist bevorzugt, dass die Position und/oder Ausrichtung der Zuführeinrichtungen und/oder die Phasenlage und/oder die Amplitude vor Durchführung eines Garprozess und/oder Reinigungsprozess in dem Garraum festgelegt wird, insbesondere bei keiner oder einer vorbestimmten Beschickung des Garraumes mit Gargut.
Bei der vorgenannten Ausführungsform ist bevorzugt, dass die Position und/oder Ausrichtung der Zuführeinrichtungen und/oder die Phasenlage und/oder Amplitude während der Durchführung des Garprozess und/oder Reinigungsprozess verändert wird, insbesondere in Abhängigkeit von zumindest einem Parameter des Garguts, wie einer geometrischen Ausdehnung und/oder einem dielektrischen Parameter des Garguts, und/oder in Abhängigkeit einer Beschickung des Garraumes, insbesondere der ersten Zone und/oder zweiten Zone und/oder während einer rollierenden Beschickung, verändert wird.
Es ist besonders bevorzugt, dass eine Veränderung der Position und/oder Ausrichtung der Zuführeinreichungen und/oder der Phasenlage und/oder die Amplitude bzw. ein Amplitudenverhältnis gesteuert bzw. geregelt erfolgen kann, insbesondere um eine vorbestimmte Verteilung der Mikrowellenstrahlung innerhalb des Garraums, der Zone und/oder einem Gargut zu erreichen.
Durch die Veränderbarkeit kann erreicht werden, dass eine vordefinierte, insbesondere gleichmäßige, Verteilung, der Mikrowellenstrahlung innerhalb des Garraums und/oder der Zonen für veränderliche Frequenzen der Mikrowellenstrahlung erreicht werden kann. So können insbesondere verschiedene Mikrowellenstrahlungen in einem Frequenzbereich von 902 bis 928MHz und/oder 2,4GHz bis 2,5GHz, insbesondere bei 2,45 KHz und/oder 900MHz, eingesetzt werden.
Weiterhin wird mit der Erfindung vorgeschlagen, dass die Beschickung mit dem Gargut, insbesondere bei Durchführung eines Garprozesses, mittels in zumindest eine Zuführeinrichtung, vorzugsweise in die Zuführeinrichtungen, insbesondere der ersten Gruppe und/oder von in der zweiten Zone angeordneten Zuführeinrichtungen, ein- und/oder rückgekoppelter Mikrowellenstrahlung erkannt wird.
Weiterhin wird vorgeschlagen, dass eine im Wesentlichen fehlende Erstreckung der Hohlraummoden in die zweite Zone mittels in einzelne Zuführeinrichtungen der ersten Gruppe ein- und/oder rückgekoppelter Mikrowellenstrahlung erkannt wird.
Bei den beiden vorgenannten Alternativen ist insbesondere bevorzugt, dass die Erkennung eingekoppelter und/oder rückgekoppelter Mikrowellenstrahlung während zumindest einer Zeitspanne durchgeführt wird, während der die Zuführeinrichtung keine Mikrowellenstrahlung emittiert oder während der die Zuführeinrichtung zumindest zeitweise Mikrowellenstrahlung emittiert und/oder die Erkennung an einzelnen Zuführeinrichtungen der ersten Gruppe durchgeführt wird, insbesondere nur ein Teil der Zuführeinrichtungen der ersten Gruppe zur Erkennung eingesetzt wird.
Ein erfindungsgemäßes Verfahren kann auch dadurch gekennzeichnet sein, dass zumindest ein Abtrennelement in den Garraum, insbesondere in einem Bereich zwischen der ersten Zone und der zweiten Zone und/oder benachbart zu dem Garraum eingebracht wird, wobei vorzugsweise das Abtrennelement zumindest bereichsweise transparent und/oder intransparent für Mikrowellenstrahlung ist. Die Verwendung solcher Abtrennelemente kann auch alternativ zu den Merkmalen des kennzeichnenden Teils des Patentanspruchs 1 durchgeführt werden.
In weiteren vorteilhaften Ausgestaltungen kann vorgesehen sein, dass das Abtrennelement im Bereich der Zuführeinrichtung, insbesondere einer Austrittsöffnung der Mikrowellenstrahlung, angeordnet wird.
Bei der vorgenannten Ausführungsform ist bevorzugt, dass eine Vielzahl von Abtrennelementen vorgesehen ist und/oder das Abtrennelement zwischen zwei Austrittsöffnungen der Zuführeinrichtungen angeordnet ist bzw. sind.
Durch diese Anordnung des Abtrennelements bzw. der Abtrennelemente gemäß der beiden vorgenannten Ausführungsformen kann erreicht werden, dass die Mikrowellenstrahlung, die durch die Austrittsöffnungen, insbesondere paarweise Austrittsöffnungen oder eine Gruppe umfassend drei Austrittsöffnungen, der Zuführeinrichtung austreten, an vorbestimmten Stellen innerhalb des Garraums konzentriert werden können. Diese Konzentration ist insbesondere höher als bei einem Weglassen des Abtrennelements.

Das Abtrennelement führt zu einer gerichteten Abstrahlung der Mikrowellen, so dass nur wenig der in den Mikrowellen enthaltenen Energie in Nachbarzonen abgegeben wird, sofern die Mikrowellenstrahlung in der Zone, in der sie konzentriert wird, absorbiert wird, insbesondere durch ein Gargut.

Dabei können die Abtrennelemente als Standardzubehör, wie Garguteinschübe und/oder Gargutträger, realisiert sein oder in solche integriert sein. Es ist ausreichend, wenn dieses Standardzubehör, wenn es als für Mikrowellenstrahlung intransparentes Abtrennelement eingesetzt wird, die austretende Mikrowellenstrahlung ausreichend ablenkt, absorbiert bzw. reflektiert.

Mittels des zuvor beschriebenen Abtrennelements wird insbesondere eine elektrische Aufteilung der Austrittsöffnung der Zuführeinrichtung bzw. der Zuführeinrichtung selber in zumindest in zwei Teile erreicht.

Hierbei ist besonders bevorzugt, dass diese Unterteilung bezüglich des Garraums bzw. der Zonen symmetrisch oder asymmetrisch erfolgt.

In besonders bevorzugten Ausführungsformen ist vorgesehen, dass die Zuführeinrichtung, die Austrittsöffnung der Zuführeinrichtung und/oder das Abtrennelement, insbesondere ein im Bereich der Zuführeinrichtung und/oder Austrittsöffnung angeordnetes Abtrennelement, beweglich gelagert ist.

Hierbei ist besonders bevorzugt, dass eine Bewegung gesteuert bzw. geregelt erfolgen kann, insbesondere um eine vorbestimmte Verteilung der Mikrowellenstrahlung innerhalb des Garraums, der Zone und/oder einem Gargut zu erreichen.

Auch kann durch die Bewegbarkeit erreicht werden, dass eine vordefinierte, insbesondere gleichmäßige, Verteilung, der Mikrowellenstrahlung innerhalb des Garraums und/oder der Zonen für veränderliche Frequenzen der Mikrowellenstrahlung erreicht werden kann. Besonders bevorzugte Ausführungsformen eines Gargeräts sehen vor, dass ein Abstand des Abtrennelements in eine Normalenrichtung einer Haupterstreckungsebene des Abtrennelements zu zumindest einer Garraumwand und/oder zu zumindest einem weiteren Abtrennelement größer als λ /2 ist, vorzugweise kleiner als λ, am bevorzugtesten im Bereich von λ /2 liegt, mit λ gleich der Wellenlänge der Mikrowellenstrahlung, vorzugsweise im Vakuum.

Weiterhin wird mit der Erfindung vorgeschlagen, dass zumindest ein Mikrowellenbeeinflussungselement in den Garraum, insbesondere die erste Zone und/oder die zweite Zone eingebracht wird, wobei vorzugsweise eine Positionierung, Ausrichtung und/oder Bewegung des Mikrowellenbeeinflussungselements in Abhängigkeit von der Frequenz, der Phasenlage, der Amplitude, der Mikrowellenstrahlung und/oder der Ausrichtung und/oder Positionierung der Zuführeinrichtungen festgelegt wird und/oder, insbesondere während eines Garvorganges, verändert wird und/oder mittels des Mikrowellenbeeinflussungselements die Ausbildung der Hohlraummoden in der ersten Zone, der zweiten Zone und/oder die räumliche Abstrahlung der Zuführeinrichtungen beeinflusst wird.

Bei den vorgenannten Ausführungsformen ist besonders bevorzugt, dass die Einbringung, Position und/oder Ausrichtung des Abtrennelements und/oder des Mikrowellenbeeinflussungselements basierend auf einer Kopplung der Zuführeinrichtungen der ersten Gruppe untereinander und/oder der in der ersten Zone und der zweiten Zone angeordneten Zuführeinrichtungen und/oder einer Abweichung zumindest eines Parameters zumindest einer Hohlraummode von zumindest einem Sollwert erkannt wird.

Schließlich wird für das erfindungsgemäße Verfahren vorgeschlagen, dass als Zuführeinrichtung zumindest eine Mikrowellenantenne und/oder zumindest ein Hohlleiter eingesetzt wird.

Weiterhin liefert die Erfindung ein Gargerät, insbesondere zur Durchführung eines erfindungsgemäßen Verfahrens, wobei das Gargerät zumindest einen Garraum, der in mehrere Zonen unterteilbar ist und zumindest zwei Zuführeinrichtungen zur Einbringung von durch zumindest eine Mikrowellenquelle erzeugte Mikrowellenstrahlung in den Garraum umfasst, wobei zumindest zwei Zuführeinrichtungen in einer ersten Zone zu zumindest einer ersten Gruppe derart zusammenfassbar sind, dass die Zuführeinrichtungen der ersten Gruppe mit einem gemeinsamen ersten Mikrowellensignal versorgbar sind und durch die von den Zuführeinrichtungen der ersten Gruppe in den Garraum abgestrahlten Mikrowellen in der ersten Zone Hohlraummoden ausgebildet sind, wobei ferner die Hohlraummoden sich im wesentlichen außerhalb einer benachbart zu der ersten Zone angeordneten, zweiten Zone erstrecken.

Für das Gargerät wird ferner vorgeschlagen, dass die Zuführeinrichtungen zumindest eine Mikrowellenantenne und/oder zumindest einen Hohlleiter umfassen, wobei vorzugsweise mittels zumindest einer der Zuführeinrichtungen eine gerichtete Abstrahlung der Mikrowellenstrahlung durchführbar ist und/oder der Abstrahlbereich der Zuführeinrichtungen sich zumindest bereichsweise überlappt, insbesondere die Zuführeinrichtungen auf gegenüberliegenden Seiten des Garraumes und/oder nebeneinander auf einer gemeinsamen Seite des Garraumes angeordnet sind.

Ein in einem erfindungsgemäßen Verfahren einsetzbares Gargerät kann auch dadurch gekennzeichnet sein, dass der Garraum in mehrere Klimazonen unterteilbar ist, vorzugsweise das Abtrennelement zumindest bereichsweise durchlässig für Garraumatmosphäre ist und/oder zumindest eine Vorrichtung zur Erzeugung sowie zur Führung von Garraumatmosphäre im Garraum vorgesehen ist.

Erfindungsgemäß ist besonders bevorzugt, dass in den Klimazonen die jeweilige Garraumatmosphäre entlang im wesentlichen horizontal verlaufender, insbesondere durch die Zonen und/oder Garebenen vorgegebene Strömungspfade strömt, wobei insbesondere die Strömungspfade in zumindest zwei Klimazonen im wesentlich parallel verlaufen, im wesentlichen entlang der Zonen und/oder ohne gegenseitige Beeinflussung der Klimata in den benachbarten Klimazonen.

Weiterhin wird mit der Erfindung vorgeschlagen, dass die jeweilige Garraumatmosphäre ein Dampf-Luft-Gemisch umfasst.

Ein erfindungsgemäßes Gargerät kann ferner dadurch gekennzeichnet sein, dass die Vorrichtung zur Erzeugung und Führung der Garraumatmosphäre zumindest eine Dampferzeugungseinrichtung, zumindest eine, vorzugweise eine Vielzahl von Dampfzufuhreinrichtung(en), insbesondere umfassend zumindest einen Dampfeinlass, zumindest eine Strömungserzeugungsvorrichtung, insbesondere umfassend zumindest ein Lüfterrad, zumindest ein Gebläse und/oder zumindest eine Pumpe, zumindest eine Dampfabfuhreinrichtung, insbesondere umfassend zumindest bereichsweise die Strömungserzeugungsvorrichtung, zumindest ein weiteres Gebläse, zumindest eine weitere Pumpe und/oder zumindest ein weiteres Lüfterrad, zumindest ein Entlüftungsrohr und/oder zumindest einen Dampfabzug, zumindest eine Strömungsregulierungseinrichtung, insbesondere umfassend zumindest bereichsweise die Strömungserzeugungsvorrichtung, zumindest ein weiteres Gebläse, zumindest ein weiteres Lüfterrad, zumindest eine weitere Pumpe und/oder zumindest einen druckdichten und/oder zumindest bereichsweise außerhalb des Garraums angeordneten Führungskanal, zumindest eine Öffnung in zumindest einer Garraumwand, insbesondere zumindest zwei paarweise gegenüberliegend in dem Garraum entlang des Strömungspfades angeordnete Öffnungen, zumindest ein Fluidführungselement und/oder zumindest eine Heizvorrichtung umfasst.

Weiterhin wird für die vorgenannte Ausführungsform vorgeschlagen, dass die Dampfzufuhreinrichtung, die Dampfabfuhreinrichtung, die Strömungsregulierungseinrichtung, die Öffnung und/oder das Fluidführungselement zumindest ein Stellglied, vorzugsweise umfassend zumindest eine Ventilklappe, umfasst bzw. umfassen, wobei vorzugsweise jeder Zone zumindest ein Stellglied zugeordnet ist.

Weiterhin schlägt die Erfindung vor, dass ein erfindungsgemäßes Gargerät gekennzeichnet ist durch zumindest einen fluidal mit dem Garraum in Verbindung stehenden Druckraum, wobei die Strömungserzeugungsvorrichtung zumindest bereichsweise in dem Druckraum angeordnet ist, vorzugsweise in dem Druckraum zumindest zwei jeweils unterschiedlichen Zonen, insbesondere Klimazonen zugeordneten Strömungserzeugungsvorrichtungen angeordnet sind.

Bei der vorgenannten Ausführungsform ist insbesondere bevorzugt, dass der Druckraum von dem Garraum mittels zumindest eines Luftleitelements getrennt ist, wobei das Luftleitelement vorzugsweise für Garraumatmosphäre und/oder für Mikrowellen zumindest bereichsweise durchlässig bzw. transparent ist.

Weiterhin wird vorgeschlagen, dass im Druckraum zumindest ein, vorzugweise herausnehmbares, Abschottelement anordbar ist, vorzugsweise im Bereich zwischen zumindest zwei Strömungserzeugungsvorrichtungen, wobei das Abschottelement vorzugsweise in Verlängerung einer Grenze zwischen zwei Zonen im Garraum, vorzugsweise Klimazonen, und/oder eines Abtrennelements positionierbar ist.

Auch wird vorgeschlagen, dass zumindest ein Abschirmelement im Bereich zumindest einer Öffnung zwischen dem Druckraum und dem Garraum angeordnet ist, wobei das Abschirmelement durchlässig für Garraumatmosphäre und intransparent für Mikrowellenstrahlung ist.

Eine vorteilhafte Ausführungsform eines Gargeräts kann dadurch gekennzeichnet sein, dass das Abtrennelement, das Abschottelement und/oder das Abschirmelement zumindest bereichsweise mit einer elektrisch isolierenden Beschichtung versehen ist bzw. sind.

Weiterhin schlägt die Erfindung vor, dass das Abtrennelement, das Abschottelement und/oder das Abschirmelement zumindest bereichsweise durch zumindest einen Gargutträger gebildet ist und/oder zumindest ein Blech, zumindest ein Netz und/oder zumindest ein Gitter, vorzugsweise mehrere Lagen, insbesondere linear, beispielsweise um λ/2 oder λ/4, und/oder rotiert versetzt zueinander, angeordnete Netze, Bleche und/oder Gitter, umfasst, wobei insbesondere eine Maschengröße zumindest des für Mikrowellenstrahlung intransparenten Bereichs des Netzes und/oder des Gitters so dimensioniert ist, dass eine Energiemenge von Mikrowellenstrahlung, die durch diesen Bereich hindurchtritt betragsmäßig geringer als die in diesem Bereich absorbierte Energiemenge ist, vorzugweise kleiner als λ /2, bevorzugter kleiner als λ /10, noch bevorzugter kleiner als λ /20, noch mehr bevorzugt kleiner als λ /50 und am bevorzugten kleiner als λ /100, dimensioniert ist.

Weiterhin schlägt die Erfindung vor, dass das Abtrennelement, das Abschottelement und/oder das Abschirmelement zumindest eine Mikrowellenfalle, insbesondere in einem an eine Öffnung des Garraums und/oder Druckraums angrenzenden Bereich, wie einer, vorzugsweise um eine horizontale oder vertikale Drehachse gelagerte, Garraumtür, umfasst bzw. umfassen.

Ein erfindungsgemäßes Gargerät kann auch gekennzeichnet sein durch zumindest einen ersten Sensor zu Erfassung zumindest eines Garraumatmosphärenparameters, wie einer Temperatur, einer Feuchte, einer Strömungsgeschwindigkeit und/oder einer Konzentration einer Komponente der Garraumatmosphäre, zumindest einen zweiten Sensor zur Erfassung zumindest eines Gargutparameters, wie einer Temperatur, einer Feuchte, einer Konsistenz, eines Kalibers, einer Gargutart und/oder eines Gewichts und/oder zumindest einen, insbesondere zumindest teilweise die Zuführungseinrichtung und/oder die Mikrowellenquelle umfassenden, dritten Sensor zur Erfassung einer Position der sich in den Zonen ausbildenden Hohlraummoden.

Mit Hilfe des dritten Sensors ist eine Erfassung der Positionierung insbesondere dadurch möglich, dass die Kopplung der über die Zuführeinrichtung zugeführten Mikrowellenstrahlung an den Garraum und/oder an weitere Zuführeinrichtungen gemessen und ausgewertet wird.

Auch wird für das Gargerät zumindest eine Steuer- und/oder Regeleinrichtung vorgeschlagen, wobei die Steuer- und/oder Regeleinrichtung mit der Vorrichtung zur Erzeugung und Führung der Garraumatmosphäre, der Dampferzeugungseinrichtung, der Dampfzufuhreinrichtung, der Dampfabfuhreinrichtung, der Strömungsregulierungseinrichtung, der Heizvorrichtung, dem Stellglied, der Mikrowellenquelle, dem ersten Sensor, dem zweiten Sensor, dem dritten Sensor, zumindest einer Ausgabeeinrichtung, zumindest einer Eingabeeinrichtung, dem Abtrennelement und/oder den Zuführeinrichtungen in Wirkverbindung steht.

Schließlich wird mit der Erfindung vorgeschlagen, dass mittels der Regel- und/oder Steuereinrichtung die vorbestimmte Verteilung von Mikrowellenstrahlungsenergie, insbesondere zur Einstellung der gewünschten Hohlraummode, vorzugsweise durch Gruppierung der Zuführeinrichtungen, Veränderung der Positionierung und/oder Ausrichtung der Zuführeinrichtungen und/oder Mikrowellenbeeinflussungselemente, der Frequenz, der Amplitude und/oder der Phase der durch die Mikrowellenquelle erzeugten und/oder durch die Zuführeinrichtung dem Garraum und/oder der Zone zugeführten Mikrowellenstrahlung und/oder mittels Veränderung der Geschwindigkeit, Phase und/oder Frequenz einer Drehung der Strömungserzeugungsvorrichtung mittels Veränderung einer Position der Auslassöffnung, des Abtrennelements und/oder des Abschottelements und/oder zumindest eines weiteren passiven, zumindest teilweise im Bereich des Garraums, der Zuführeinrichtung und/oder der Mikrowellenquelle angeordneten Einstellelementes geregelt und/oder gesteuert wird.

Der Erfindung liegt somit die überraschende Erkenntnis zugrunde, dass auf konstruktiv einfache und damit kostengünstige Weise die Durchführung paralleler Garvorgänge in einem Garraum auch unter Einsatz von Mikrowellenstrahlung ermöglicht werden kann, indem unterschiedliche Zonen innerhalb des Garraums ausgebildet werden, und zwar durch eine Gruppierung der Zuführeinrichtungen, die in den jeweiligen Zonen angeordnet sind. Dadurch werden "virtuelle" Zonen ausgebildet. Hierunter wird insbesondere verstanden, dass die Zonen frei von elektromagnetisch wirkenden Barrieren/Trennungen an den Zonengrenzen ausgebildet werden. Bevorzugt sind also keine für Mikrowellenstrahlung intransparente Abtrennelemente an den Zonengrenzen vorgesehen bzw. die Grenzen zwischen den Zonen sind grundsätzlich transparent für Mikrowellenstrahlung. Bei den Zonen handelt es sich insbesondere um Garebenen, die vorzugsweise horizontal verlaufen.

Dies ermöglicht es, ohne dass eine elektromagnetische Trennung der einzelnen Zonen notwendig ist, mit einem vertretbaren mathematischen und messtechnischen Aufwand die Unterteilung in die einzelnen Zonen zu erreichen. Indem die zusammen gruppierten Zuführeinrichtungen mit im wesentlichen dem selben Signal versorgt werden, kann durch eine einmalige Festlegung der Position und Ausrichtung der Zuführeinrichtungen in der jeweiligen Zone bzw. die geometrische Ausgestaltung der Verbindungsleitungen von der Mikrowellenquelle zu den Zuführeinrichtungen erreicht werden, dass sich in dem Garraum derartige Hohlraummoden ausbilden, dass diese im wesentlichen ausschließlich sich in der gewünschten Zone erstrecken und die Mikrowellenstrahlung nicht in benachbarte Zonen eintritt, zumindest eine Abstrahlung in benachbarte Zonen minimiert wird.

Ergänzend können die Zuführeinrichtungen bzw. die Zuleitungen zu diesen so ausgebildet sein, dass die Mikrowellensignale in einzelnen Zuführeinrichtungen in einer Zone phasenverschoben bzw. mit unterschiedlichen Amplituden, also einem vorgegebenen Amplitudenverhältnis, zugeführt werden. Durch die entsprechende Einstellung der Phasenverschiebung und des Amplitudenverhältnisses wird der gewünschte Effekt einer minimalen Abstrahlung der Mikrowellenstrahlung in benachbarte Zonen unterstützt. Diese Voreinstellung, insbesondere der Phasenverschiebung und des Amplitudenverhältnisses, können in einem leeren Garraum bzw. einem Garraum mit vordefinierten Einbauten oder einem Garraum, in dem eine vordefinierte Beschickung bzw. Beladung vorhanden ist, durchgeführt werden.

Ist diese Voreinstellung der Zuführeinrichtungen bzw. der der Zuführeinrichtung zugeführten Signale durchgeführt, kann dann die gesamte Gruppe der Zuführeinrichtungen als einzelne Zuführeinrichtung bzw. Antenne behandelt werden. Im Gegensatz zu dem aus dem Stand der Technik bekannten Verfahren kommt es somit zu einer deutlichen Reduzierung der Komplexität des mathematischen und messtechnischen Aufwands. So werden beispielsweise bei einer Aufteilung des Garraums in vier Zonen bzw. Garebenen nur vier unterschiedliche Elemente in Form der gruppierten Zuführeinrichtungen angesteuert, um die gewünschte Mikrowellenenergieverteilung in dem Garraum zu erzielen.

Die Gruppierung der Zuführeinrichtungen bietet ferner den Vorteil, dass die Ausbildung der gewünschten Hohlraummode in den jeweiligen Zonen auch dadurch überwacht bzw. detektiert werden kann, dass die an die jeweiligen Zuführeinrichtungen rücklaufenden Mikrowellen in der jeweiligen Zone bzw. benachbarten Zonen detektiert werden. Somit kann also auch in dem Fall, in dem Abtrennelemente zwischen den einzelnen Zonen angeordnet werden, beispielsweise Gargutträger, die jedoch durchlässig für Mikrowellenstrahlung sind, verlässlich die nicht gewünschte Abstrahlung der Mikrowellenstrahlung in andere Zonen des Garraumes verhindert werden.

Die Ausbildung der Zonen kann jedoch optional durch zumindest ein Abtrennelement, das insbesondere für Mikrowellenstrahlung intransparent ist, unterstützt werden. Vorzugsweise kann das Abtrennelement für Garraumatmosphäre durchlässig sein.

Aufgrund der Möglichkeit der Detektierung der sich in der jeweiligen Zone bzw. dem Garraum ausbildenden Moden wird auch eine Einschuberkennung ermöglicht. Darunter wird verstanden, dass erkannt wird, ob und wie ein Abtrennelement, wie ein Gargutträger, in den Garraum eingeführt ist. In dem Fall, in dem zwischen zwei Zonen kein metallischer Einschub, wie ein Abtrennelement oder Gargutträger, eingeschoben ist, ist eine Kopplung zwischen den Zuführeinrichtungsgruppen für die jeweiligen Zonen stärker. Auch nach der zuvor beschriebenen Einstellung der Phasenlage bzw. Amplitudenverhältnisse reduziert sich bei Einführung des Einschubs eine Kopplung zwischen den jeweiligen Zuführeinrichtungen.

Eine derartige Einschuberkennung ist auch auf die Weise möglich, dass eine Modenstruktur bei in dem Garraum vorhandenen Einschüben im wesentlichen bekannt ist. Weicht die vorliegende Modenstruktur von dieser vorbekannten Soll-Modenstruktur ab, ist davon auszugehen, dass ein entsprechender Einschub nicht vorhanden ist. Dies ermöglicht es auch, dass nicht nur erkannt wird, ob überhaupt ein Einschub vorhanden ist oder nicht, sondern auch, an welcher Position dieser vorhanden ist bzw. fehlt bzw. ob dieser korrekt positioniert ist.

Insbesondere in dem Fall, in dem über die Mikrowellenquelle ein Signal mit einer einzigen Frequenz zugeführt wird, kann durch die zuvor beschriebene Voreinstellung die gewünschte Aufteilung des Garraumes in die unterschiedlichen Zonen ohne weitere spätere Anpassung erreicht werden. Wird jedoch über die Mikrowellenquelle eine Strahlung variabler Frequenz zugeführt bzw. soll ein größerer Frequenzbereich abgedeckt werden, ist es vorteilhaft, wenn während der Durchführung eines Garprozesses und/oder Reinigungsprozesses die Phasenverschiebung bzw. das Amplitudenverhältnis der Signale, die in den Zuführeinrichtungen in einer Zone zugeführt werden, verändert wird.

Auch kann in Abhängigkeit von der zugeführten Frequenz eine Position oder Ausrichtung der Zuführeinrichtungen verändert werden. Eine derartige Anpassung der Zuführeinrichtungen bzw. der den Zuführeinrichtungen zugeführten Signale kann auch in Abhängigkeit von einem gewählten Garprogramm bzw. einer Beschickung des Garraumes erfolgen. Die Anpassung wird dann einmalig bei Beginn des Garprozesses durchgeführt und kann vorzugsweise während des Garprozesses wiederholt durchgeführt werden. Dies ermöglicht es insbesondere, dass auf Veränderungen der Eigenschaften des Garguts während des Garprozesses sowie einer Veränderung der geometrischen Ausdehnung und/oder der dielektrischen Eigenschaften adäquat reagiert werden kann.

Hinsichtlich der Zuführeinrichtungen ist es besonders vorteilhaft, wenn diese eine inhomogene Abstrahlcharakteristik aufweisen, insbesondere gerichtet abstrahlen, wie es bei Richtantennen der Fall ist. Diese können so in den jeweiligen Zonen angeordnet werden, dass bereits aufgrund der Abstrahlcharakteristik ein Übersprechen, also eine Abstrahlung in eine benachbarte Zone minimiert wird. Um eine möglichst gute Steuerung der sich in der jeweiligen Zone ausbildenden Hohlraummoden zu ermöglichen, bei einer möglichst geringen Anzahl von Zuführeinrichtungen, sollten sich die Abstrahlbereiche der jeweiligen Zuführeinrichtungen in einer Zone größtmöglich überlappen. Bevorzugt ist, dass die Zuführeinrichtungen aufeinander zugerichtet gegenüberliegenden Seiten des Garraumes bzw. der Zone angeordnet sind oder nebeneinander bei Abstrahlung in einem wesentlichen gleichen Bereich.

Ergänzend zu der Gruppierung der Zuführeinrichtungen können auch weitere Mikrowellenbeeinflussungselemente in dem Garraum angeordnet werden. Bei diesen kann es sich um passive Elemente handeln, die eine Abstrahlung der Mikrowellen in den Garraum bzw. jeweilige Zone beeinflussen bzw. die Ausbildung der jeweiligen Moden innerhalb des Garraumes bzw. der Zone beeinflussen. Hierbei können insbesondere bewegliche Mikrowellenbeeinflussungselemente bzw. passive Elemente eingesetzt werden, um die Abstrahlcharakteristik in der Zuführeinrichtung bzw. die Modenform zu verändern.

Schließlich kann die Ausbildung der gewünschten Moden auch dadurch unterstützt werden, dass die Mikrowellenstrahlung in der jeweiligen Zone mit der Rotation einer Strömungserzeugungsvorrichtung, wie einem Lüfterrad, korreliert wird. So führt die Drehung bzw. Bewegung des metallischen Lüfterrades dazu, dass die Moden innerhalb des Garraumes bzw. der Zone beeinflusst werden, was gezielt dazu benutzt werden kann, eine Abstrahlung von Mikrowellenenergie in nicht gewünschte Bereiche bzw. Zonen zu minimieren.

Insbesondere wenn Festkörpermikrowellengeneratoren eingesetzt werden, wird eine Detektierung des Garguts durch eine Analyse der sich in der Zone ausbildenden Mikrowellenmoden möglich. So kann auf diese Weise auf den Einsatz eines zusätzlichen Gargutsensors verzichtet bzw. dieser Gargutsensor einfacher ausgestaltet werden. So können zumindest einzelne Parameter des Garguts, die ansonsten über einen Gargutsensor aufgenommen werden müssen, durch die Analyse der Mikrowellenstrahlung aufgenommen werden. Hierbei ist es besonders bevorzugt, dass in zumindest einer Zuführeinrichtung, insbesondere während der Durchführung eines Garprozesses, rück- bzw. eingekoppelte Mikrowellenstrahlung analysiert wird. Hierbei können für die Analyse aber auch die Anwendung anderer Verfahren, wie die Erwärmung des Garraums zu Reinigungszwecken, die Zuführeinrichtungen unabhängig von ihrem Zusammenschluss zu Gruppen einzeln betrachtet werden. Die rückgekoppelte Strahlung kann zu einem Zeitpunkt bzw. in einer Zeitspanne betrachtet werden, bei welchem bzw. in welcher die jeweilige Zuführeinrichtung zumindest zeitweise Mikrowellenstrahlung emittiert oder keine Mikrowellenstrahlung emittiert. Auch kann die Analyse der Mikrowellenstrahlung so erfolgen, dass über eine jeweilige Zuführeinrichtung Mikrowellenstrahlung erfasst wird, die von einer weiteren Zuführeinrichtung, beispielsweise einer Zuführeinrichtung der gleichen Gruppe, emittiert wird, aber auch Mikrowellenstrahlung analysiert wird, die von der jeweiligen Zuführeinrichtung selber emittiert und deren reflektierten Anteile in die gleiche Zuführeinrichtung zurückgekoppelt werden.

Alternativ ist es auch vorstellbar, dass die Abtrennelemente unabhängig von der Zusammenfassung der Zuführeinrichtungen zu Gruppen eingesetzt werden. Insbesondere in diesem Fall werden durch die Abtrennelemente für die Mikrowellenstrahlung unterschiedliche Hohlräume ausgebildet, die jeweils über separate Mikrowelleneinspeisungseinrichtungen, wie Mikrowellenantennen, mit Mikrowellenstrahlung versorgt. In jeder dieser Zonen kann dann eine Anpassung der Moden unabhängig zu benachbarten Zonen erfolgen. Dies ermöglicht, dass für jede Zone auf einfache Weise, insbesondere wenn Festkörpermikrowellengeneratoren eingesetzt werden, eine Detektierung des Garguts durch eine Analyse der sich in der Zone ausbildenden Mikrowellenmoden erreicht werden kann. Insbesondere kann auf diese Weise auf den Einsatz eines zusätzlichen Gargutsensors verzichtet bzw. dieser Gargutsensor einfacher ausgestaltet werden. So können zumindest einzelne Parameter des Garguts, die ansonsten über einen Gargutsensor aufgenommen werden müssen, durch die Analyse der Mikrowellenstrahlung aufgenommen werden.

Mittels der Abtrennelemente kann der Garraum ferner in unterschiedliche Abschnitte, insbesondere horizontal verlaufende Abschnitte, unterteilt werden. Dies kann auch unter Ausbildung von Klimazonen erfolgen. Bei für Garraumatmosphäre transparenten Abtrennelementen können die Zonen im Hinblick auf die in dieser befindlichen Garraumatmosphäre, durch die Abtrennelemente, miteinander kommunizieren. Dies bietet den Vorteil, im Vergleich zu einer hermetischen Unterteilung, dass Klimaschwankungen in einer Zone, wie Feuchtigkeitsschwankungen durch Austritt von Dampf aus einem Gargut oder starke Absorption von Feuchte durch ein Gargut, schneller ausgeglichen werden können. So führen zu starke Gradienten von Klimaparametern zwischen Zonen zu einem Ausgleich durch die Abtrennelemente hindurch, beispielsweise durch Konvektion der Garraumatmosphäre.

Insbesondere in dem Fall, in dem das Abtrennelement zumindest bereichsweise auch durch einen Gargutträger gebildet ist, können auf einfache Weise die unterschiedlichen Zonen in dem Garraum ausgebildet werden. Ein Benutzer muss insbesondere nicht zunächst getrennt einen Einschub in den Garraum einführen bevor das Gargut eingebracht wird.

Die in dem erfindungsgemäßen Gargerät eingesetzte Mikrowellenstrahlung weist vorteilhafterweise eine Frequenz von 900 MHz oder 2,45 GHz auf. So sind diese Frequenzen weltweit für Mikrowellenanwendungen zur Garung von Lebensmitteln zugelassen und weisen ferner positive physikalische Eigenschaften auf. So ist die Wellenlänge bei einer Frequenz von 2,45 GHz insbesondere zur Durchführung eines Verfahrens zum Garen geeignet, da ansonsten mit zunehmender Wellenlänge eine Eindringtiefe in ein Gargut steigt. Bei Einsatz von Festkörpermikrowellengeneratoren zur Detektion des Garguts durch die reflektierte Mikrowellenstrahlung bei geringeren Frequenzen sinkt ferner die Auflösung. Gleichzeitig nimmt für größere Wellenlänge die Größe der Mikrowellenantennen bzw. Hohlleiter zu.

Es ist auch möglich, bei Einsatz von unterschiedlichen Wellenlängen der Mikrowellenstrahlung in dem Gargerät gleichzeitig die erfindungsgemäße Unterteilung in die verschiedenen Zonen zu erreichen. Werden das Abtrennelement, die Zuführeinrichtung und/oder die Auslassöffnung beweglich ausgebildet, so kann eine gewünschte Verteilung der Strahlung im Garraum und/oder den Zonen für andere Frequenzen angepasst werden.

Darüber hinaus ermöglicht es die Frequenz von 2,45GHz, die einer Wellenlänge von 12cm im Vakuum entspricht, dass als Abtrennelemente Gitter oder Netze eingesetzt werden können, welche eine Maschengröße von kleiner als 6cm, 1,2cm oder 0,1cm aufweisen. Derartige Maschengrößen stellen einerseits eine Intransparenz für Mikrowellenstrahlung sicher und andererseits wird dadurch bestmöglich der Durchtritt von Garraumatmosphäre sichergestellt.

Im Sinne der Erfindung liegt eine Intransparenz des Abtrennelement insbesondere dann vor, wenn eine Reflektion von Mikrowellenstrahlung durch das Abtrennelement stärker ist als ein Durchtritt der Mikrowellenstrahlung durch das Abtrennelement. Somit wird sichergestellt, dass die Mikrowellenmoden in einem benachbarten Bereich nicht wesentlich beeinflusst werden. Zur Erreichung der Abtrennwirkung ist insbesondere bevorzugt, dass das Abtrennelement in elektrischem Kontakt mit der jeweiligen Garraumwand bzw. den in seinem Bereich angeordneten Gargutträgern steht.

An Stellen, an denen eine Abdichtung der Mikrowellenstrahlung mittels der Abtrennelemente ohne eine feste Verbindung nicht möglich ist, beispielsweise im Bereich von Öffnungen des Garraums, wie sie im Bereich einer Garraumtür vorliegen, kann mit sogenannten Mikrowellenfallen im Bereich des Rands des Abtrennelements gearbeitet werden. Unter einer Mikrowellenfalle wird die Ausbildung einer Struktur, in die die Mikrowelle eindringen kann und die durch destruktive Interferenz zu einer Auslöschung an der Eintrittsstelle führt, verstanden. Die Mikrowellenstrahlung tritt in diesen ein, wird jedoch vollständig ausgelöscht. Dies wird beispielsweise dadurch erreicht, dass in einem Abstand von λ/4 zur reflektierenden Wand ein Schwingungsknoten erzeugt wird. Auch diese Weise wird in diesem Öffnungsbereich, insbesondere Türbereich, eine bestmögliche elektromagnetische Trennung der Zonen erreicht. Alternativ oder ergänzend zu diesen Mikrowellenfallen kann eine Abdichtung an solchen Öffnungsstellen auch durch eine elektrische Kontaktierung eines Verschlusses der Öffnung, wie der Garraumtür, erfolgen. In diesem Falle ist der Abstand der jeweiligen Kontaktstellen so gewählt, dass er in Bezug auf die Wellenlänge der Mikrowellenstrahlung durchgehend erfolgt, also der Abstand geringer als die Hälfte der Wellenlänge der Mikrowellenstrahlung ist. Würde ein größerer Abstand gewählt, würden sich "Lücken" bilden, die mit der Wellenlänge vergleichbar sind, so dass diese Lücken selber wieder als Antennen für eine benachbarte Zone wirken und damit zu einer Veränderung der Moden in der Zone führen. So würde es zu einer Kopplung zwischen den Mikrowellenmoden im Bereich der Lücke und im Bereich der benachbarten Zone kommen. Dies lässt sich sowohl für horizontal als auch vertikal angelenkte Türen realisieren.

Es kann auch vorgesehen sein, dass das Abtrennelement selbst Bereiche aufweist, in welchen es undurchlässig für die Garraumatmosphäre ist. Dies ermöglicht es, dass das Abtrennelement auch gleichzeitig die Funktion eines Führungselements für die Garraumatmosphäre übernimmt. Dies bietet sich insbesondere in Bereichen an, in denen eine Öffnung zu einem Druckraum, in dem eine Strömungserzeugungsvorrichtung angeordnet ist, vorhanden ist. So kann durch das Abtrennelement sichergestellt werden, dass die Garraumatmosphäre entlang eines Strömungspfades, der parallel zu einer benachbarten Zone verläuft, strömt.

Darüber hinaus können die zuvor erwähnten Abschirmelemente wiederum für Mikrowellenstrahlung undurchlässig, jedoch für Garraumatmosphäre durchlässig, sein. Ein derartiges, beispielsweise als Sieb oder Gitter ausgebildetes Abschirmelement führt dazu, dass die sich in der jeweiligen Zone ausbildenden Mikrowellenmoden nicht durch die Drehung von metallischen Teilen der Strömungserzeugungsvorrichtung beeinflusst werden. Eine Kopplung der Hohlräume im Druckraum und des Garraums über die Strömungserzeugungsvorrichtung und die ständige Veränderung der Hohlraummoden durch deren Drehung könnte ansonsten die Analyse und gezielte Anwendung von Mikrowellenenergie in der jeweiligen Zone negativ beeinflussen.

In alternativen Ausführungsformen kann aber auch vorgesehen sein, dass die Verbindungsöffnung zwischen dem Garraum und dem Druckraum für Mikrowellenstrahlung durchlässig ist. So kann durch eine geeignete Abstimmung der Einspeisung von Mikrowellenstrahlung in die Zone, insbesondere bezüglich Frequenz, Amplitude und Phase, eine Synchronisation mit der Drehung der Strömungserzeugungsvorrichtung erreicht werden. So kann eine gezielte Beeinflussung der Mikrowellenmoden erreicht werden, um beispielsweise eine stärkere Erwärmung vorbestimmter Bereiche eines Garguts im Vergleich zu restlichen Bereichen des Garguts zu erzielen. In diesen Fällen ist insbesondere eine Ansaugöffnung, ein Ausblasschlitz bzw. weitere Öffnungen zum Druckraum nicht durch ein Abschirmelement verschlossen.

Auch hat die erfindungsgemäße Ausgestaltung des Gargeräts den Vorteil, dass eine Kontrolle von in einer jeweiligen Zone ausgebildeten Hohlraummoden auf konstruktiv einfache Weise realisiert werden kann. So muss nur eine vergleichsweise geringe Anzahl von Zuführelementen wie Mikrowellenantennen, in der jeweiligen Zone angeordnet werden, um die gewünschte Verteilung der Mikrowellenstrahlung in der jeweiligen Zone zu erreichen. Grundsätzlich gilt, dass die Zahl der Moden in einem Hohlraum proportional zum Quotient aus dem Volumen des Hohlraums geteilt durch (λ/2) ^{^3} ist. Geht man von einer Frequenz von 2,45 GHz, also einer Wellenlänge von 12 cm im Vakuum, aus, ergeben sich bei Garraumgrößen, wie sie bei Profigargeräten vorhanden sind, insbesondere bei begehbaren Garräumen, mehrere tausend Hohlraummoden. Werden jedoch die Abtrennelemente eingesetzt, verringert sich das für jeden Mikrowellenhohlraum zu beachtende Volumen signifikant, so dass mit einem vertretbaren technischen und mathematischen Aufwand die geringere Anzahl von Moden in der jeweiligen Zone gesteuert und geregelt werden kann.

Eine Ausbildung der jeweiligen Moden in dem Garraum bzw. der jeweiligen Zone kann, insbesondere zeitgleich zur Durchführung eines Garprozesses, dadurch kontrolliert bzw. geregelt werden, dass in eine Zuführeinrichtung oder eine Teilgruppe von Zuführeinrichtungen rückgekoppelte Mikrowellenstrahlung analysiert wird. Dadurch wird insbesondere auch nicht die Vermeidung einer Abstrahlung in benachbarte Zonen negativ beeinflusst, da sich die Felder der Mikrowellenstrahlung der einzelnen Zuführeinrichtungen einer Gruppe weiterhin linear überlagern.

Werden die Zonen derartig ausgebildet, dass sie geringfügig größer als λ/2 sind, wird einerseits sichergestellt, dass sich zwischen den einzelnen Abtrennelementen beziehungsweise in den jeweiligen Zonen Eigenmoden ausbilden können. Wird eine Größe der Zonen begrenzt, kann sichergestellt werden, dass in einer Normalenrichtung der Abtrennelemente nur eine Mode ausgebildet werden kann und sich nur ein Wellenbauch bildet. Damit ergibt sich die Anzahl der sich ausbildenden Moden ungefähr zu dem Quotient aus Garfläche geteilt durch (λ/2)². Damit werden zweidimensionale Moden ausgebildet und es müssen nur zwei Zuführeinrichtungen pro Zone vorgesehen werden, um alle entstehenden Moden anregen oder detektieren zu können. Ist darüber hinaus eine Änderung der Moden beziehungsweise die Ausbildung sich überlagender Moden zur Ausbildung verschiedener Erwärmungszonen innerhalb der Zone gewünscht, können selbstverständlich auch eine größere Anzahl von Antennen eingesetzt werden, wie in der WO 2011/138675 beschrieben.

Wird eine solche ungleichmäßige Energieverteilung in der Zone gewünscht, so kann durch eine entsprechende Modulation der Moden durch Anpassung der Amplituden, Phasen und Frequenz eine gewünschte ungleichmäßige Energieverteilung in der jeweiligen Zone erreicht werden. Insbesondere in dem Fall, in dem die Abtrennelemente selbst als Strömungsleitelemente dienen, also bereichsweise nicht durchlässig für Garraumatmosphäre sind, wird gleichzeitig eine Optimierung der Strömung in den jeweiligen Zonen erreicht und so eine Gleichmäßigkeit und Strömung und eine Verbesserung des Energieeintrags in das Gargut erreicht.

Eine Ausrichtung oder Positionierung der Zuführeinrichtungen beziehungsweise eine Einstellung der Phasenverschiebung und/oder des Amplitudenverhältnisses kann im leeren Garraum oder mit einer vorbestimmten Beladung des Gargeräts und/oder mit vorbestimmten Einbauten, wie Abtrennelementen und/oder Abschottelementen, im Garraum optimiert und für nachfolgende Garprozesse fest vorgegeben sein. Alternativ ist auch vorstellbar, dass diese Parameter in Abhängigkeit von einem Garprogramm beziehungsweise einer Beschickung des Garraumes angepasst werden können. Dies kann einmalig zu Beginn eines Garprozesses erfolgen. Auch kann während eines Garprozesses eine kontinuierliche Nachführung derartiger Parameter erfolgen. Dies ist insbesondere dann zweckmäßig, wenn sich die Eigenschaften des Garguts während des Garprozesses wesentlich ändern, beispielsweise sich die geometrische Ausdehnung und/oder die dielektrischen Eigenschaften verändern. Ferner bietet die vorbeschriebene Gruppierung der Zuführelemente den Vorteil, dass diese eine Erkennung der Abtrennelemente ermöglicht. Befindet sich zwischen zwei Zonen kein Element, ist eine stärkere Kopplung zwischen den Gruppen der Zuführeinrichtung in den verschiedenen Zonen vorhanden. Befindet sich jedoch ein Trennelement in der vorbestimmten Position, so ist die Kopplung zwischen den Gruppen der Zuführeinrichtungen reduziert. Diese Erkennung kann auch dadurch erfolgen, dass eine sich in dem Garraum beziehungsweise in den einzelnen Zonen ausbildende Hohlraummode mit einer Soll-Mode verglichen wird und aufgrund der Abweichung der Moden das Fehlen eines Abtrennelements in einer SollPosition oder eine Fehlpositionierung des Abtrennelementes erkannt werden kann. Insgesamt können die einzelnen Zonen effektiver und weitestgehend lastunabhängig voneinander beeinflusst werden, da der Energieaustausch zwischen den Zonen durch die Mikrowellenstrahlung verhindert, zumindest gedrosselt wird.

Weitere Merkmale und Vorteile der Erfindung ergeben sich aus der nachfolgenden Beschreibung, in der bevorzugte Ausführungsformen der Erfindung anhand von schematischen Zeichnungen erläutert sind.

Dafür zeigt:
- Figur 1: eine schematische Querschnittansicht eines Gargeräts gemäß einer ersten Ausführungsform der Erfindung;
- Figur 2: eine schematische Querschnittansicht des Gargeräts der Figur 1 aus Richtung A in Figur 1; und
- Figur 3: eine schematische Querschnittansicht eines Gargeräts gemäß einer zweiten Ausführungsform der Erfindung.

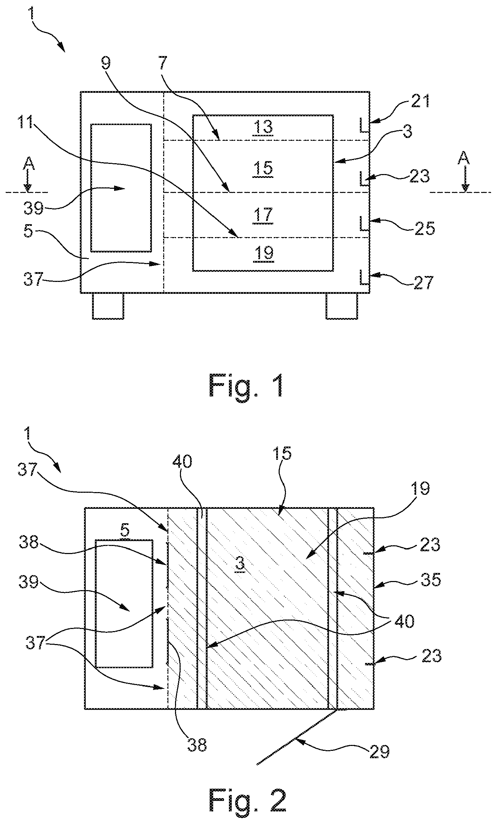

Wie Figur 1 zu entnehmen ist, umfasst ein Gargerät 1 einen Garraum 3 sowie einen Druckraum 5. Der Garraum 3 ist durch virtuelle Grenzen 7, 9, 11 durch ein erfindungsgemäßes Verfahren in Zonen 13, 15, 17, 19 unterteilt. Jeder der Zonen 13, 15, 17, 19 sind jeweiligen Zuführeinrichtungen in Form von Mikrowellenantenne 21, 23, 25, 27 zugeordnet.

Wie insbesondere Figur 2 zu entnehmen ist, handelt es sich bei den Mikrowellenantennen 21, 23, 25, 27 um Mikrowellenantennenpaare. Der Einsatz von Mikrowellenantennenpaaren ermöglicht die Durchführung des erfindungsgemäßen Verfahrens. Bevorzugt ist jedoch, dass zumindest in einer der Zonen 13, 15, 17, 19, vorzugsweise allen Zonen 13, 15, 17, 19, zumindest jeweils drei Mikrowellenantennen 21, 23, 25, 27 zugeordnet bzw. in diesen angeordnet sind.

So ist in Figur 2 insbesondere ersichtlich, dass in der ersten Zone 15 die Mikrowellenantennen 23 an einer Garraumwand 35 nebeneinander angeordnet sind. Bei den Mikrowellenantennen 23 handelt es sich um Antennen, die im wesentlichen in die gleiche Richtung Mikrowellenstrahlung abgeben. Dadurch wird erreicht, dass sich die von den Mikrowellenantennen 23 abgegebene Mikrowellenstrahlung in einem größtmöglichen Bereich überlappt. Erfindungsgemäß werden die Mikrowellenantennen 23 so gruppiert, dass sie mit einem und dem selben Mikrowellensignal, gegebenenfalls jedoch mit einer Phasenverschiebung bzw. unterschiedlichen Amplituden, angesteuert werden. Dadurch wird erreicht, dass eine vorbestimmte Hohlraummode in der ersten Zone 15 ausgebildet wird. Diese Hohlraummode wird so gewählt, dass eine Abstrahlung von Mikrowellenstrahlung in benachbarte zweite Zonen, in Form der Zonen 13, 17 und 19, minimiert wird. Nach einmaliger Einstellung der Zuführeinrichtungen bzw. der den Zuführeinrichtungen 23 zugeführten Signale kann die Gruppe der Mikrowellenantennen 23, insbesondere die zwei Mikrowellenantennen 23 bzw. die in der nicht dargestellten Ausführungsform eingesetzten drei Mikrowellenantennen, als eine einzelne Antenne angesehen werden. Analog wird eine Anpassung der Mikrowellenantenne 21, 25, 27, unabhängig ob es sich um zwei oder drei in der jeweiligen Zone angeordnete und zu einer jeweiligen Gruppe zusammengefasste Mikrowellenantennen handelt, durch eine entsprechende Gruppierung und Einstellung der diesen zugeführten Signale durchgeführt. Dadurch wird erreicht, dass die den einzelnen Mikrowellenantennen zugeführten Signale bzw. die Ausrichtung der Positionierung der Zuführeinrichtungen nicht einzeln verändert werden muss, sondern lediglich die Signale der den vier Mikrowellenantennengruppen 21, 23, 25, 27 zugeführten Signale verändert werden müssen.

Somit wird es möglich, dass eine rollierende Beschickung beispielsweise so durchgeführt wird, dass für eine Durchführung paralleler Garvorgänge in den Zonen 15 und 19 lediglich die Mikrowellenantenne 23 und 27 angesteuert werden, wobei durch die sich ausbildenden Moden in diesen Zonen eine Abstrahlung in die Zonen 13 und 17 bzw. eine gegenseitige Beeinflussung der Moden in den Zonen 15 und 19 minimiert wird.

Wie Figur 2 darüber hinaus zu entnehmen ist, umfasst das Gargerät 1 eine Garraumtür 29 sowie die bereits erwähnte Garraumwand 35. Insbesondere bei Einsatz eines Festkörpermikrowellengenerators als Mikrowellenquelle ermöglicht die Detektierung der in die Mikrowellenantennengruppen 21, 23, 25, 27 (rück)gekoppelte Mikrowellenenergie die Detektierung der in den jeweiligen Zonen ausgebildeten Mikrowellenmoden, die Erkennung von Garparametern und Gargutparametern als auch die Erkennung einer Abstrahlung von Mikrowellenstrahlung aus einer ersten Zone in eine der benachbarten Zonen. Dies ermöglicht es, dass durch die Anpassung der Signale an die jeweiligen Antennengruppen eine Nachjustierung bzw. Anpassung der Moden vorgenommen werden kann, um ein gewünschtes Garergebnis zu erzielen. Da als Variablen ausschließlich die vier den Mikrowellenantennengruppen zugeführten Signale einzustellen sind, ist der mathematische Aufwand zur Einstellung der gewünschten Moden deutlich reduziert im Vergleich zur getrennten Ansteuerung der einzelnen Zuführeinrichtungen.

In dem in den Figuren 1 und 2 dargestellten Ausführungsbeispiel ist der Druckraum 5 mittels Abschirmelementen 37 vom Garraum 3, insbesondere den Zonen 13, 15, 17, 19 im Hinblick auf die Mikrowellenstrahlung abgeschottet. Die Abschirmelemente sind im Bereich von Luftleitblechen 38 angeordnet. Somit wird sichergestellt, dass sich die in den jeweiligen Zonen 13, 15, 17, 19 ausbildenden Mikrowellenmoden nicht mit einem sich im Druckraum 5 drehenden Lüfterrad 39 koppeln können. Ansonsten könnte es zu einer Beeinflussung der Moden kommen. Wie Fig. 2 zu entnehmen ist, sind im Garraum 3 Einschubschienen 40 für nicht dargestellte Garguträger vorhanden, insbesondere für Abtrennelemente.

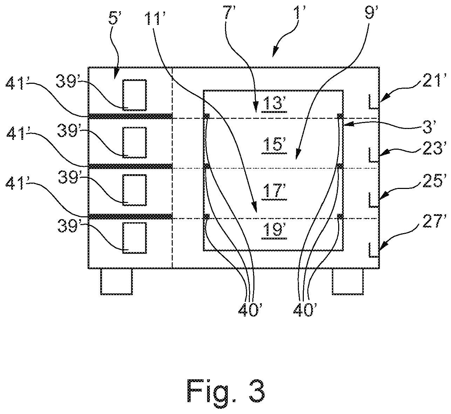

In der in Fig. 3 dargestellten Ausführungsform eines Gargeräts 1' sind im Bereich der Grenzen 7', 9', 11' Abtrennelemente in Form von Gargutträgern angeordnet, die auf den Schienen 40' geführt sind. Es kann sich bei den Abtrennelementen aber auch um Gitter bzw. Roste, die intransparent für Mikrowellenstrahlung sind, handeln und/oder zusätzlich sind sie durchlässig für Garraumatmosphäre. Ferner ist in dem Gargerät 1' vorgesehen, dass die Mikrowellenstrahlung auch in den Druckraum 5' eintreten kann. Diejenigen Elemente des Gargeräts 1', die denjenigen des Gargeräts 1 entsprechen, tragen die gleichen Bezugszeichen, allerdings einfach gestrichen. Das Gargerät 1' weist mehrere im Druckraum 5' angeordnete Lüfterräder 39' auf. Die die Amplitude, Frequenz und/oder Phase der über die Mikrowellenantennengruppen 21', 23', 25', 27' in die jeweilige Zone 13', 15', 17', 19' eingespeisten Mikrowellenmoden wird bzw. werden an die Drehung des jeweiligen Lüfterrads 39' angepasst. Dadurch kann erreicht werden, dass durch die Drehung des Lüfterrads 39' eine vorbestimmte und gewünschte Beeinflussung der Moden in den Zonen 13', 15', 17', 19' erfolgt, um eine gewünschte Energieverteilung bzw. Vergleichsmäßigung des Energieeintrags in der jeweiligen Klimazone sicherzustellen aber gleichzeitig eine Abstrahlung in benachbarte Zonen zu minimieren. Hierzu kann vorgesehen sein, dass das Abtrennelement in einem an eine Garraumtür angrenzenden Bereich Mikrowellenfallen aufweist.

Das aus dem Garraum wahlweise entnehmbare bzw. in den Garraum einfügbare Abtrennelement steht an seinem Außenrand in elektrischem Kontakt mit der elektrisch leitfähigen Garraumwand. Dadurch wird auch im Randbereich des Abtrennelements sichergestellt, dass in der Garraumzone 15' ausgebildete Mikrowellenmoden nicht an Mikrowellenmoden in benachbarten Zonen 13', 17' ankoppeln können.

Eine derartige Ankopplung wird durch die Mikrowellenfallen sicher verhindert. Auch der Druckraum 5' kann alternativ mittels Abschirmelementen vom Garraum 3', insbesondere den Zonen 13', 15', 17', 19' im Hinblick auf die Mikrowellenstrahlung abgeschottet sein.

Dabei ist ferner vorgesehen, dass die Abtrennung der einzelnen Zonen 13', 15', 17', 19' sich auch im Druckraum 5' fortsetzt. So sind entsprechende Abschottelemente 41' im Druckraum 5' angeordnet, um ein Koppeln der Mikrowellenmoden in jeweilige Zonen 13', 15', 17', 19' über den Druckraum 5' zu vermeiden. Solche Abschottelemente 41' können auch in einem Druckraum eingesetzt sein, in dem ein einzelnes Lüfterrad angeordnet ist, insbesondere unabhängig davon, ob Abschirmelemente zwischen dem Druckraum und Garraum vorhanden sind.

Das erfindungsgemäße Verfahren ermöglicht es insbesondere, dass das Vorhandensein bzw. die korrekte Positionierung der Garguteinschübe bzw. Abtrennelemente detektiert werden kann. So führt das Einführen der Trennelemente bzw. des Gargutträgers, auch wenn dieser transparent für Mikrowellenstrahlung ist, dazu, dass eine Kopplung zwischen den einzelnen Zonen reduziert wird. Dies lässt sich insbesondere bei Einsatz eines Festkörpermikrowellengenerators detektieren, so dass erkannt werden kann, ob und wo ein Abtrennelement bzw. ein Gargutträger eingeschoben wurde.

Eine derartige Erkennung ist auch durch die Analyse der in den jeweiligen Zonen bestehenden Mikrowellenmoden möglich. Aufgrund der Abweichung einer Istmode von einer Sollmode kann auf das Vorhandensein zum Fehlen eines Einschubes geschlossen werden.

### Bezugszeichenliste

- 1, 1': Gargerät
- 3, 3': Garraum
- 5, 5': Druckraum
- 7, 9, 11, 7', 9', 11': Grenze

- 13, 15, 17, 19, 13', 15', 17', 19': Zonen

- 21, 23, 25, 27, 21', 23', 25', 27': Mikrowellenantenne
- 29: Garraumtür

- 31: Bereich
- 35: Garraumwand
- 37: Abschirmelement
- 38: Luftleitblech
- 39, 39': Lüfterrad
- 40, 40': Einschubschiene
- 41': Abschottelement

- A: Richtung

## Patentansprüche

1. Verfahren zur Unterteilung zumindest eines Garraumes (3, 3') eines Gargeräts (1, 1') in mehrere Zonen (13, 15, 17, 19, 13', 15', 17', 19'), wobei mittels zumindest einer Zuführeinrichtung (21, 23, 25, 27, 21', 23', 25', 27') von durch zumindest eine Mikrowellenquelle erzeugte Mikrowellenstrahlung in den Garraum (3, 3') eingebracht wird, wobei
zur Unterteilung des Garraums (3, 3') in zumindest zwei Zonen (13, 15, 17, 19, 13', 15', 17', 19') zumindest zwei Zuführeinrichtungen (23, 23') in einer ersten Zone (15, 15') zu zumindest einer ersten Gruppe zusammengefasst werden, die Zuführeinrichtungen (23, 23') der ersten Gruppe mit einem gemeinsamen ersten Mikrowellensignal versorgt werden, wobei die Zuführeinrichtungen (23, 23') in der ersten Zone (15, 15') mit einem phasenverschobenen Mikrowellensignal und/oder mit unterschiedlichen Amplituden angesteuert werden, damit durch die von den Zuführeinrichtungen (23, 23') der ersten Gruppe in den Garraum (3, 3') abgestrahlten Mikrowellen in der ersten Zone (15, 15') vorbestimmte Hohlraummoden ausgebildet werden, wobei die vorbestimmten Hohlraummoden so gewählt sind, dass sie sich im wesentlichen außerhalb zumindest einer benachbart zu der ersten Zone (15, 15') angeordneten, zweiten Zone (13, 13', 17, 17', 19, 19') erstrecken und eine Abstrahlung von Mikrowellenstrahlung in die benachbarte zweite Zone (13, 13', 17, 17', 19, 19') minimiert wird, **dadurch gekennzeichnet, dass**
eine im wesentlichen fehlende Erstreckung der Hohlraummoden in die zweite Zone (13, 13', 17, 17', 19, 19') mittels in einzelne Zuführeinrichtungen (21, 23, 25, 27, 21', 23', 25', 27') der ersten Gruppe ein- und/oder rückgekoppelter Mikrowellenstrahlung erkannt wird.

2. Verfahren nach Anspruch 1, **dadurch gekennzeichnet, dass**
zumindest drei Zuführeinrichtungen (23, 23') zu der ersten Gruppe zusammengefasst werden, der Garraum in zumindest zwei virtuelle Zonen (13, 15, 17, 19, 13', 15', 17', 19') unterteilt wird, insbesondere zumindest eine Grenze, vorzugsweise alle Grenzen zwischen den virtuellen Zonen zumindest bereichsweise, vorzugsweise im wesentlichen vollständig, transparent für Mikrowellenstrahlung ist bzw. sind, das erste Mikrowellensignal mit unterschiedlicher Phasenlagen und/oder Amplitude an die einzelnen Zuführeinrichtungen (23, 23') der ersten Gruppe geleitet wird und/oder durch die Zonen (13, 15, 17, 19, 13', 15', 17', 19') Garebenen innerhalb des Garraumes (3, 3') definiert werden.

3. Verfahren nach Anspruch 1 oder 2, **dadurch gekennzeichnet, dass**
eine Position und/oder Ausrichtung der Zuführeinrichtungen (23, 23') und/oder die Phasenlage und/oder die Amplitude in Abhängigkeit von einer Frequenz des den Zuführeinrichtungen (23, 23') der ersten Gruppe zugeführten Mikrowellensignals festgelegt wird.

4. Verfahren nach Anspruch 3, **dadurch gekennzeichnet, dass**
die Position und/oder Ausrichtung der Zuführeinrichtungen (23, 23') und/oder die Phasenlage und/oder die Amplitude bei Veränderung der Frequenz der über die Mikrowellenquelle erzeugten Mikrowellenstrahlung verändert wird.

5. Verfahren nach einem der vorangehenden Ansprüche, **dadurch gekennzeichnet, dass**
die Position und/oder Ausrichtung der Zuführeinrichtungen (23, 23') und/oder die Phasenlage und/oder die Amplitude in Abhängigkeit von einer, insbesondere rollierenden, Beschickung des Garraumes (3, 3'), insbesondere der ersten Zone (15, 15') und/oder der zweiten Zone (13, 13', 17, 17', 19, 19'), mit Gargut, festgelegt wird.

6. Verfahren nach Anspruch 5, **dadurch gekennzeichnet, dass**
die Position und/oder Ausrichtung der Zuführeinrichtungen (23, 23') und/oder die Phasenlage und/oder die Amplitude vor Durchführung eines Garprozess und/oder Reinigungsprozess in dem Garraum (3, 3') festgelegt wird, insbesondere bei keiner oder einer vorbestimmten Beschickung des Garraumes (3, 3') mit Gargut.

7. Verfahren nach Anspruch 5 oder 6, **dadurch gekennzeichnet, dass**
die Position und/oder Ausrichtung der Zuführeinrichtungen (23, 23') und/oder die Phasenlage und/oder Amplitude während der Durchführung des Garprozess und/oder Reinigungsprozess verändert wird, insbesondere in Abhängigkeit von zumindest einem Parameter des Garguts, wie einer geometrischen Ausdehnung und/oder einem dielektrischen Parameter des Garguts, und/oder in Abhängigkeit einer Beschickung des Garraumes (3, 3'), insbesondere der ersten Zone (15, 15') und/oder zweiten Zone (13, 13', 17, 17', 19, 19') und/oder während einer rollierenden Beschickung, verändert wird.

8. Verfahren nach einem der Ansprüche 5 bis 7, **dadurch gekennzeichnet, dass**
die Beschickung mit dem Gargut, insbesondere bei Durchführung eines Garprozesses, mittels in zumindest eine Zuführeinrichtung, vorzugsweise in die Zuführeinrichtungen (21, 23, 25, 27, 21', 23', 25', 27'), insbesondere der ersten Gruppe und/oder von in der zweiten Zone (13, 13', 17, 17', 19, 19') angeordneten Zuführeinrichtungen (21, 21', 25, 25', 27, 27'), ein- und/oder rückgekoppelter Mikrowellenstrahlung erkannt wird.

9. Verfahren nach einem der vorangehenden Ansprüche, **dadurch gekennzeichnet, dass**
die im wesentlichen fehlende Erstreckung der Hohlraummoden in die zweite Zone (13, 13', 17, 17', 19, 19') ferner mittels von in der zweiten Zone (13, 13', 17, 17', 19, 19') angeordneten Zuführeinrichtungen (21, 21', 25, 25', 27, 27') ein- und/oder rückgekoppelter Mikrowellenstrahlung erkannt wird.

10. Verfahren nach Anspruch 1, 8 oder 9, **dadurch gekennzeichnet, dass**
die Erkennung eingekoppelter und/oder rückgekoppelter Mikrowellenstrahlung während zumindest einer Zeitspanne durchgeführt wird, während der die Zuführeinrichtung keine Mikrowellenstrahlung emittiert oder während der die Zuführeinrichtung zumindest zeitweise Mikrowellenstrahlung emittiert und/oder die Erkennung an einzelnen Zuführeinrichtungen der ersten Gruppe so durchgeführt wird, dass nur ein Teil der Zuführeinrichtungen der ersten Gruppe zur Erkennung eingesetzt wird.

11. Verfahren nach einem der vorangehenden Ansprüche, **dadurch gekennzeichnet, dass**
die Position und/oder Ausrichtung der Zuführeinrichtungen (23, 23') und/oder die Phasenlage und/oder die Amplitude in Abhängigkeit zumindest einer Geschwindigkeit, einer Phase und/oder einer Frequenz einer Drehung einer in dem Garraum (3, 3') und/oder einem mit dem Garraum (3, 3') fluidal verbundenen Druckraum (5, 5') angeordneten Strömungserzeugungsvorrichtung (39, 39') verändert wird.

12. Verfahren nach einem der vorangehenden Ansprüche, **dadurch gekennzeichnet, dass**
zumindest ein Abtrennelement in den Garraum (3, 3'), insbesondere in einem Bereich (7, 9, 11, 7', 9', 11') zwischen der ersten Zone (15, 15') und der zweiten Zone (13, 13', 17, 17', 19, 19') und/oder benachbart zu dem Garraum (3, 3') eingebracht wird, wobei vorzugsweise das Abtrennelement zumindest bereichsweise transparent und/oder intransparent für Mikrowellenstrahlung ist.

13. Verfahren nach einem der vorangehenden Ansprüche, **dadurch gekennzeichnet, dass**
zumindest ein Mikrowellenbeeinflussungselement in den Garraum, insbesondere die erste Zone (15, 15') und/oder die zweite Zone (13, 13', 17, 17', 19, 19') eingebracht wird, wobei vorzugsweise eine Positionierung, Ausrichtung und/oder Bewegung des Mikrowellenbeeinflussungselements in Abhängigkeit von der Frequenz, der Phasenlage, der Amplitude, der Mikrowellenstrahlung und/oder der Ausrichtung und/oder Positionierung der Zuführeinrichtungen (21, 21', 23, 23', 25, 25', 27, 27') festgelegt wird und/oder, insbesondere während eines Garvorganges, verändert wird und/oder mittels des Mikrowellenbeeinflussungselements die Ausbildung der Hohlraummoden in der ersten Zone (15, 15'), der zweiten Zone (13, 13', 17, 17', 19, 19') und/oder die räumliche Abstrahlung der Zuführeinrichtungen (21, 21', 23, 23' 25, 25', 27, 27') beeinflusst wird.

14. Verfahren nach einem der Ansprüche 12 oder 13, **dadurch gekennzeichnet, dass** die Einbringung, Position und/oder Ausrichtung des Abtrennelements und/oder des Mikrowellenbeeinflussungselement basierend auf einer Kopplung der Zuführeinrichtungen (23, 23') der ersten Gruppe untereinander und/oder der in der ersten Zone (15, 15') und der zweiten Zone (13, 13', 17, 17', 19, 19') angeordneten Zuführeinrichtungen (21, 23, 25, 27, 21', 23', 25', 27') und/oder einer Abweichung zumindest eines Parameters zumindest einer Hohlraummode von zumindest einem Sollwert erkannt wird.

15. Verfahren nach einem der vorhergehenden Ansprüche, **dadurch gekennzeichnet, dass**
als Zuführeinrichtungen zumindest eine Mikrowellenantenne (21, 23, 25, 27) und/oder zumindest ein Hohlleiter eingesetzt wird.

16. Gargerät (1, 1'), eingerichtet zur Durchführung eines Verfahrens nach einem der vorangehenden Ansprüche, wobei das Gargerät (1, 1') zumindest einen Garraum (3, 3'), der in mehrere Zonen (13, 15, 17, 19, 13', 15', 17', 19') unterteilbar ist und zumindest zwei Zuführeinrichtungen (21, 23, 25, 27, 21', 23', 25', 27') zur Einbringung von durch zumindest eine Mikrowellenquelle erzeugte Mikrowellenstrahlung in den Garraum (3, 3') umfasst, wobei zumindest zwei Zuführeinrichtungen (13, 13') in einer ersten Zone (15, 15') zu zumindest einer ersten Gruppe derart zusammenfassbar sind, dass die Zuführeinrichtungen (23, 23') der ersten Gruppe mit einem gemeinsamen ersten Mikrowellensignal versorgt werden, wobei die Zuführeinrichtungen (23, 23') in der ersten Zone (15, 15') mit einem phasenverschobenen Mikrowellensignal und/oder mit unterschiedlichen Amplituden angesteuert werden, damit durch die von den Zuführeinrichtungen (23, 23') der ersten Gruppe in den Garraum (3, 3') abgestrahlten Mikrowellen in der ersten Zone (15, 15') Hohlraummoden ausgebildet sind, wobei die Hohlraummoden sich im wesentlichen außerhalb einer benachbart zu der ersten Zone (15, 15') angeordneten, zweiten Zone (13, 13', 17, 17', 19, 19') erstrecken, **dadurch gekennzeichnet, dass** eine im wesentlichen fehlende Erstreckung der Hohlraummoden in die zweite Zone (13, 13', 17, 17', 19, 19') mittels in einzelne Zuführeinrichtungen (21, 23, 25, 27, 21', 23', 25', 27') der ersten Gruppe ein- und/oder rückgekoppelter Mikrowellenstrahlung erkennbar ist.

17. Gargerät nach Anspruch 16, **dadurch gekennzeichnet, dass**
die Zuführeinrichtungen zumindest eine Mikrowellenantenne und/oder zumindest einen Hohlleiter umfassen, wobei vorzugsweise mittels zumindest einer der Zuführeinrichtungen (21, 23, 25, 27, 21', 23', 25', 27') eine gerichtete Abstrahlung der Mikrowellenstrahlung durchführbar ist und/oder der Abstrahlbereich der Zuführeinrichtungen sich zumindest bereichsweise überlappt, insbesondere die Zuführeinrichtungen (21, 23, 25, 27, 21', 23', 25', 27') auf gegenüberliegenden Seiten des Garraumes (3, 3') und/oder nebeneinander auf einer gemeinsamen Seite des Garraumes (3, 3') angeordnet sind.

## Claims

1. A method for subdividing at least one cooking space (3, 3') of a cooking device (1, 1') into multiple zones (13, 15, 17, 19, 13', 15', 17', 19'), wherein microwave radiation produced by at least one microwave source is introduced into the cooking space (3, 3') by means of at least one feeder device (21, 23, 25, 27, 21', 23', 25', 27'), wherein in order to subdivide the cooking space (3, 3') into at least two zones (13, 15, 17, 19, 13', 15', 17', 19') at least two feeder devices (23, 23') are combined in a first zone (15, 15') to form at least one first group, the feeder devices (23, 23') of the first group are supplied with a common first microwave signal, wherein the feeder devices (23, 23') in the first zone (15, 15') are controlled with a phase-shifted microwave signal and/or with different amplitudes, so that predetermined cavity modes are configured in the first zone (15, 15') by the microwaves radiated by the feeder devices (23, 23') of the first group into the cooking space (3, 3'), wherein the predetermined cavity modes are selected such that they substantially extend outside at least one second zone (13, 13', 17, 17', 19, 19') arranged adjacent to the first zone (15, 15') and a radiation of microwave radiation into the adjacent second zone (13, 13', 17, 17', 19, 19') is minimised, **characterised in that**
a substantially missing extension of the cavity modes into the second zone (13, 13', 17, 17', 19, 19') is identified by means of microwave radiation coupled into and/or fed back into individual feeder devices (21, 23, 25, 27, 21', 23', 25', 27') of the first group.

2. The method according to Claim 1, **characterised in that**
at least three feeder devices (23, 23') are combined to form the first group,
the cooking space is subdivided into at least two virtual zones (13, 15, 17, 19, 13', 15', 17', 19'), in particular at least one boundary, preferably all of the boundaries between the virtual zones, is or respectively are, at least in certain areas, preferably substantially completely, transparent to microwave radiation, the first microwave signal is conducted with different phasings and/or amplitude to the individual feeder devices (23, 23') of the first group and/or cooking levels within the cooking space (3, 3') are defined by the zones (13, 15, 17, 19, 13', 15', 17', 19').

3. The method according to Claim 1 or 2, **characterised in that**
a position and/or alignment of the feeder devices (23, 23') and/or the phasing and/or the amplitude is/are set as a function of a frequency of the microwave signal supplied to the feeder devices (23, 23') of the first group.

4. The method according to Claim 3, **characterised in that**
the position and/or alignment of the feeder devices (23, 23') and/or the phasing and/or the amplitude is/are modified on modification of the frequency of the microwave radiation produced by means of the microwave source.

5. The method according to any one of the preceding claims, **characterised in that**
the position and/or alignment of the feeder devices (23, 23') and/or the phasing and/or the amplitude is/are fixed as a function of an, in particular rolling, charging of the cooking space (3, 3'), in particular of the first zone (15, 15') and/or of the second zone (13, 13', 17, 17', 19, 19'), with the product to be cooked.

6. The method according to Claim 5, **characterised in that**
the position and/or alignment of the feeder devices (23, 23') and/or the phasing and/or the amplitude is/are fixed prior to performing a cooking process and/or cleaning process in the cooking space (3, 3'), in particular when no charging or a predetermined charging of the cooking space (3, 3') with the product to be cooked takes place.

7. The method according to Claim 5 or 6, **characterised in that** the position and/or alignment of the feeder devices (23, 23') and/or the phasing and/or amplitude is/are modified during the performance of the cooking process and/or cleaning process, in particular as a function of at least one parameter of the product to be cooked such as a geometrical extent and/or a dielectric parameter of the product to be cooked, and/or as a function of a charging of the cooking space (3, 3'), in particular of the first zone (15, 15') and/or second zone (13, 13', 17, 17', 19, 19') and/or during a rolling charging.

8. The method according to any one of Claims 5 to 7, **characterised in that** the charging with the product to be cooked, in particular during the performance of a cooking process, is identified by means of microwave radiation coupled into and/or fed back into at least one feeder device, preferably into the feeder devices (21, 23, 25, 27, 21', 23', 25', 27'), in particular of the first group, and/or from feeder devices (21, 21', 25, 25', 27, 27') arranged in the second zone (13, 13', 17, 17', 19, 19').

9. The method according to any one of the preceding claims, **characterised in that**
the substantially missing extension of the cavity modes into the second zone (13, 13', 17, 17', 19, 19') is further identified by means of microwave radiation coupled into and/or fed back from feeder devices (21, 21', 25, 25', 27, 27') arranged in the second zone (13, 13', 17, 17', 19, 19').

10. The method according to Claim 1, 8 or 9, **characterised in that**
the identification of coupled-in and/or fed-back microwave radiation is performed during at least one period of time, during which the feeder device does not emit any microwave radiation or during which the feeder device at least temporarily emits microwave radiation and/or the identification is performed at individual feeder devices of the first group such that only a part of the feeder devices of the first group is used for identification.

11. The method according to any one of the preceding claims, **characterised in that**
the position and/or alignment of the feeder devices (23, 23') and/or the phasing and/or the amplitude is/are modified as a function of at least one speed, one phase and/or one frequency of a rotation of a flow production device (39, 39') arranged in the cooking space (3, 3') and/or in a pressure chamber (5, 5') fluidically connected to the cooking space (3, 3').

12. The method according to any one of the preceding claims, **characterised in that** at least one separating element is introduced into the cooking space (3, 3'), in particular in a region (7, 9, 11, 7', 9', 11') between the first zone (15, 15') and the second zone (13, 13', 17, 17', 19, 19') and/or adjacent to the cooking space (3, 3'), wherein the separating element is preferably transparent and/or non-transparent to microwave radiation, at least in certain areas.

13. The method according to any one of the preceding claims, **characterised in that** at least one microwave influencing element is introduced into the cooking space, in particular into the first zone (15, 15') and/or the second zone (13, 13', 17, 17', 19, 19'), wherein a positioning, alignment and/or movement of the microwave influencing element is preferably fixed and/or modified, in particular during a cooking process, as a function of the frequency, the phasing, the amplitude, the microwave radiation and/or the alignment and/or positioning of the feeder devices (21, 21', 23, 23', 25, 25', 27, 27') and/or the configuration of the cavity modes in the first zone (15, 15'), the second zone (13, 13', 17, 17', 19, 19') and/or the spatial radiation of the feeder devices (21, 21', 23, 23' 25, 25', 27, 27') is/are influenced by means of the microwave influencing element.

14. The method according to any one of Claims 12 or 13, **characterised in that** the introduction, position and/or alignment of the separating element and/or of the microwave influencing element is/are identified based on a coupling of the feeder devices (23, 23') of the first group among one another and/or of the feeder devices (21, 23, 25, 27, 21', 23', 25', 27') arranged in the first zone (15, 15') and the second zone (13, 13', 17, 17', 19, 19') and/or of a deviation of at least one parameter of at least one cavity mode from at least one desired value.

15. The method according to any one of the preceding claims, **characterised in that** at least one microwave antenna (21, 23, 25, 27) and/or at least one waveguide is/are used as feeder devices.

16. A cooking device (1, 1'), which is adapted to perform a method according to any one of the preceding claims, wherein the cooking device (1, 1') comprises at least one cooking space (3, 3') which can be subdivided into multiple zones (13, 15, 17, 19, 13', 15', 17', 19') and at least two feeder devices (21, 23, 25, 27, 21', 23', 25', 27') for introducing microwave radiation produced by at least one microwave source into the cooking space (3, 3'), wherein at least two feeder devices (13, 13') can be combined in a first zone (15, 15') to form at least one first group in such a manner that the feeder devices (23, 23') of the first group are supplied with a common first microwave signal, wherein the feeder devices (23,23') in the first zone (15,15') are controlled with a phase-shifted microwave signal and/or with different amplitudes, such that
cavity modes are configured in the first zone (15, 15') by the microwaves radiated by the feeder devices (23, 23') of the first group into the cooking space (3, 3'), wherein the cavity modes substantially extend outside a second zone (13, 13', 17, 17', 19, 19') arranged adjacent to the first zone (15, 15'), **characterised in that**
a substantially missing extension of the cavity modes into the second zone (13, 13', 17, 17', 19, 19') can be identified by means of microwave radiation coupled into and fed back into individual feeder devices (21, 23, 25, 27, 21', 23', 25', 27') of the first group.

17. The cooking device according to Claim 16, **characterised in that**
the feeder devices comprise at least one microwave antenna and/or at least one waveguide, wherein a directed radiation of the microwave radiation can preferably be performed by means of at least one of the feeder devices (21, 23, 25, 27, 21', 23', 25', 27') and/or the radiation zone of the feeder devices overlaps at least in certain areas, in particular the feeder devices (21, 23, 25, 27, 21', 23', 25', 27') are arranged on opposite sides of the cooking space (3, 3') and/or next to one another on a common side of the cooking space (3, 3').

## Revendications

1. Procédé pour la subdivision d'au moins un espace de cuisson (3, 3') d'un appareil de cuisson (1, 1') en plusieurs zones (13, 15, 17, 19, 13', 15', 17', 19'), du rayonnement micro-ondes généré par au moins une source de micro-ondes étant introduit dans l'espace de cuisson (3, 3') à l'aide d'au moins un dispositif d'alimentation (21, 23, 25, 27, 21', 23', 25', 27'),
au moins deux dispositifs d'alimentation (23, 23') dans une première zone (15, 15') étant regroupés en au moins un premier groupe pour la subdivision de l'espace de cuisson (3, 3') en au moins deux zones (13, 15, 17, 19, 13', 15', 17', 19'), les dispositifs d'alimentation (23, 23') du premier groupe étant alimentés par un premier signal micro-ondes commun, les dispositifs d'alimentation (23, 23') dans la première zone (15, 15') étant excités par un signal micro-ondes déphasé et/ou avec des amplitudes différentes, pour que des modes de vide prédéterminés soient formés dans la première zone (15, 15') par les micro-ondes émises par les dispositifs d'alimentation (23, 23') du premier groupe dans l'espace de cuisson (3, 3'), les modes de vide prédéterminés étant sélectionnés de telle sorte qu'ils s'étendent essentiellement hors d'au moins une deuxième zone (13, 13', 17, 17', 19, 19') disposée dans le voisinage de la première zone (15, 15') et qu'une émission de rayonnement micro-ondes dans la deuxième zone (13, 13', 17, 17', 19, 19') voisine est minimisé, **caractérisé en ce qu'** une étendue essentiellement manquante des modes de vide dans la deuxième zone (13, 13', 17, 17', 19, 19') est détectée au moyen de rayonnement micro-ondes injecté et/ou réinjecté dans des dispositifs d'alimentation (21, 23, 25, 27, 21', 23', 25', 27') individuels du premier groupe.

2. Procédé selon la revendication 1, **caractérisé en ce qu'**
au moins trois dispositifs d'alimentation (23, 23') sont réunis en le premier groupe, l'espace de cuisson est subdivisé en au moins deux zones virtuelles (13, 15, 17, 19, 13', 15', 17', 19'), en particulier au moins une limite, de préférence toutes les limites entre les zones virtuelles au moins par région, de préférence essentiellement totalement, est ou sont transparente(s) pour du rayonnement micro-ondes, le premier signal micro-ondes est amené aux dispositifs d'alimentation (23, 23') individuels du premier groupe avec des positions de phase et/ou amplitudes différentes et/ou des niveaux de cuisson sont définis par les zones (13, 15, 17, 19, 13', 15', 17', 19') à l'intérieur de l'espace de cuisson (3, 3').

3. Procédé selon la revendication 1 ou 2, **caractérisé en ce que**
une position et/ou orientation des dispositifs d'alimentation (23, 23') et/ou la position de phase et/ou l'amplitude sont définies en fonction d'une fréquence du signal micro-ondes amené aux dispositifs d'alimentation (23, 23') du premier groupe.

4. Procédé selon la revendication 3, **caractérisé en ce que**
la position et/ou l'orientation des dispositifs d'alimentation (23, 23') et/ou la position de phase et/ou l'amplitude sont modifiées par la modification de la fréquence du rayonnement micro-ondes généré par la source de micro-ondes.

5. Procédé selon l'une des revendications précédentes, **caractérisé en ce que**
la position et/ou l'orientation des dispositifs d'alimentation (23, 23') et/ou la position de phase et/ou l'amplitude sont définies en fonction d'une alimentation, en particulier continue, de l'espace de cuisson (3, 3'), en particulier de la première zone (15, 15') et/ou de la deuxième zone (13, 13', 17, 17', 19, 19'), par un produit de cuisson.

6. Procédé selon la revendication 5, **caractérisé en ce que**
la position et/ou l'orientation des dispositifs d'alimentation (23, 23') et/ou la position de phase et/ou l'amplitude sont définies avant l'exécution d'un processus de cuisson et/ou d'un processus de nettoyage dans l'espace de cuisson (3, 3'), en particulier par aucune alimentation ou par une alimentation prédéterminée de l'espace de cuisson (3, 3') par un produit de cuisson.

7. Procédé selon la revendication 5 ou 6, **caractérisé en ce que**
la position et/ou l'orientation des dispositifs d'alimentation (23, 23') et/ou la position de phase et/ou l'amplitude sont modifiées pendant l'exécution du processus de cuisson et/ou du processus de nettoyage, sont modifiées en particulier en fonction d'au moins un paramètre du produit de cuisson, tel qu'une extension géométrique, et/ou un paramètre diélectrique du produit de cuisson, et/ou en fonction d'une alimentation de l'espace de cuisson (3, 3'), en particulier de la première zone (15, 15') et/ou de la deuxième zone (13, 13', 17, 17', 19, 19') et/ou pendant une alimentation continue.

8. Procédé selon l'une des revendications 5 à 7, **caractérisé en ce que**
l'alimentation par le produit de cuisson, en particulier lors de l'exécution d'un processus de cuisson, est détectée au moyen de rayonnement micro-ondes injecté et/ou réinjecté dans au moins un dispositif d'alimentation, de préférence dans les dispositifs d'alimentation (21, 23, 25, 27, 21', 23', 25', 27'), en particulier du premier groupe, et/ou par des dispositifs d'alimentation (21, 21', 25, 25', 27, 27') disposés dans la deuxième zone (13, 13', 17, 17', 19, 19').

9. Procédé selon l'une des revendications précédentes, **caractérisé en ce que**
l'étendue essentiellement manquante des modes de vide dans la deuxième zone (13, 13', 17, 17', 19, 19') est détectée en outre au moyen de rayonnement micro-ondes injecté et/ou réinjecté par des dispositifs d'alimentation (21, 21', 25, 25', 27, 27') disposés dans la deuxième zone (13, 13', 17, 17', 19, 19').

10. Procédé selon la revendication 1, 8 ou 9, **caractérisé en ce que**
la détection de rayonnement micro-ondes injecté et/ou réinjecté est exécutée pendant au moins une période pendant laquelle le dispositif d'alimentation n'émet aucun rayonnement micro-ondes ou pendant laquelle le dispositif d'alimentation émet au moins périodiquement du rayonnement micro-ondes et/ou la détection est exécutée sur des dispositifs d'alimentation individuels du premier groupe de telle sorte que seule une fraction des dispositifs d'alimentation du premier groupe est utilisée pour la détection.

11. Procédé selon l'une des revendications précédentes, **caractérisé en ce que**
la position et/ou l'orientation des dispositifs d'alimentation (23, 23') et/ou la position de phase et/ou l'amplitude sont modifiées au moins en fonction d'une vitesse, d'une phase et/ou d'une fréquence d'une rotation d'un dispositif de génération de flux (39, 39') disposé dans l'espace de cuisson (3, 3') et/ou dans une chambre de pression (5, 5') raccordée fluidiquement avec l'espace de cuisson (3, 3').

12. Procédé selon l'une des revendications précédentes, **caractérisé en ce qu'**
au moins un élément de séparation est introduit dans l'espace de cuisson (3, 3'), en particulier dans une région (7, 9, 11, 7', 9', 11') entre la première zone (15, 15') et la deuxième zone (13, 13', 17, 17', 19, 19') et/ou dans le voisinage de l'espace de cuisson (3, 3'), l'élément de séparation étant de préférence transparent et/ou opaque au rayonnement micro-ondes, au moins par endroits.

13. Procédé selon l'une des revendications précédentes, **caractérisé en ce qu'**
au moins un élément d'influence des micro-ondes est introduit dans l'espace de cuisson, en particulier dans la première zone (15, 15') et/ou la deuxième zone (13, 13', 17, 17', 19, 19'), de préférence une position, une orientation et/ou un mouvement de l'élément d'influence des micro-ondes étant définis et/ou modifiés, en particulier pendant un processus de cuisson, en fonction de la fréquence, de la position de phase, de l'amplitude, du rayonnement micro-ondes et/ou de l'orientation et/ou du positionnement des dispositifs d'alimentation (21, 21', 23, 23', 25, 25', 27, 27'), et/ou la formation des modes de vide dans la première zone (15, 15'), la deuxième zone (13, 13', 17, 17', 19, 19') et/ou l'émission spatiale des dispositifs d'alimentation (21, 21', 23, 23', 25, 25', 27, 27') sont influencés au moyen de l'élément d'influence des micro-ondes.

14. Procédé selon l'une des revendications 12 ou 13, **caractérisé en ce que**
l'introduction, la position et/ou l'orientation de l'élément de séparation et/ou de l'élément d'influence des micro-ondes sont détectés sur la base d'un couplage des dispositifs d'alimentation (23, 23') du premier groupe entre eux et/ou des dispositifs d'alimentation (21, 23, 25, 27, 21', 23', 25', 27') disposés dans la première zone (15, 15') et la deuxième zone (13, 13', 17, 17', 19, 19') et/ou d'un écart d'au moins un paramètre d'au moins un mode de vide par rapport à au moins une valeur prescrite.

15. Procédé selon l'une des revendications précédentes, **caractérisé en ce qu'**
au moins une antenne micro-ondes (21, 23, 25, 27) et/ou au moins un guide d'ondes sont utilisés comme dispositifs d'alimentation.

16. Appareil de cuisson (1, 1'), installé pour l'exécution d'un procédé selon l'une des revendications précédentes,
l'appareil de cuisson (1, 1') comprenant au moins un espace de cuisson (3, 3'), lequel peut être subdivisé en plusieurs zones (13, 15, 17, 19, 13', 15', 17', 19'), et au moins deux dispositif d'alimentation (21, 23, 25, 27, 21', 23', 25', 27') pour l'introduction dans l'espace de cuisson (3, 3') de rayonnement micro-ondes généré par au moins une source de micro-ondes,
au moins deux dispositifs d'alimentation (13, 13') pouvant être regroupés dans une première zone (15, 15') en au moins un premier groupe de telle sorte que les dispositifs d'alimentation (23, 23') du premier groupe sont alimentés par un premier signal micro-ondes commun, les dispositifs d'alimentation (23, 23') dans la première zone (15, 15') étant excités par un signal micro-ondes déphasé et/ou avec des amplitudes différentes, afin que des modes de vide soient formés dans la première zone (15, 15') par les micro-ondes émises dans l'espace de cuisson (3, 3') par les dispositifs d'alimentation (23, 23') du premier groupe, les modes de vide s'étendant essentiellement hors d'une deuxième zone (13, 13', 17, 17', 19, 19') voisine de la première zone (15, 15'), **caractérisé en ce qu'**
une étendue essentiellement manquante des modes de vide dans la deuxième zone (13, 13', 17, 17', 19, 19') peut être détectée au moyen de rayonnement micro-ondes injecté et/ou réinjecté dans des dispositifs d'alimentation (21, 23, 25, 27, 21', 23', 25', 27') individuels du premier groupe.

17. Appareil de cuisson selon la revendication 16, **caractérisé en ce que**
les dispositifs d'alimentation comprennent au moins une antenne micro-ondes et/ou au moins un guide d'ondes, une émission dirigée du rayonnement micro-ondes pouvant être effectuée de préférence au moyen d'au moins un des dispositifs d'alimentation (21, 23, 25, 27, 21', 23', 25', 27') et/ou les régions de rayonnement des dispositifs d'alimentation se chevauchant au moins par endroits, les dispositifs (21, 23, 25, 27, 21', 23', 25', 27') étant en particulier disposés sur des côtés opposés de l'espace de cuisson (3, 3') et/ou les uns à côté des autres sur un côté commun de l'espace de cuisson (3, 3').
